(19) Europäisches Patentamt
European Patent Office
Office européen des brevets

(11) EP 4 012 464 B1

(12) **EUROPEAN PATENT SPECIFICATION**

(45) Date of publication and mention of the grant of the patent:
**16.04.2025 Bulletin 2025/16**

(21) Application number: **20213491.2**

(22) Date of filing: **11.12.2020**

(51) International Patent Classification (IPC):
***E04G 11/14*** *(2006.01)* ***E04G 9/10*** *(2006.01)*
***E04G 11/08*** *(2006.01)* ***G02B 6/00*** *(2006.01)*

(52) Cooperative Patent Classification (CPC):
**E04G 11/14; E04G 9/10; E04G 11/08; G02B 6/0008**

(54) **LIGHT BUS IN BUILDING CONSTRUCTIONS WITH FORMWORK PANELS**

LICHTBUS IN GEBÄUDEKONSTRUKTIONEN MIT SCHALUNGSPLATTEN

BUS DE LUMIÈRE DANS DES CONSTRUCTIONS DE BÂTIMENTS COMPORTANT DES PANNEAUX DE COFFRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.06.2022 Bulletin 2022/24**

(73) Proprietor: **PERI SE**
**89264 Weißenhorn (DE)**

(72) Inventor: **JÄRLEBERG, Mikael**
**89264 Weissenhorn (DE)**

(74) Representative: **Schwarz, Claudia**
**Schwarz + Kollegen**
**Patentanwälte**
**Heilmannstraße 19**
**81479 München (DE)**

(56) References cited:
**DE-A1- 19 520 795** **DE-C2- 19 520 795**
**FR-A1- 3 059 020** **KR-A- 20160 116 892**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 012 464 B1

## Description

The present invention relates to enabling data exchange between formwork panels used in building constructions. In particular the present invention relates to a formwork panel to a method for operating a master light hub, to a method for operating a slave light hub, to a system for light-based signal exchange between our plurality of formwork panels and a respective protocol for implementing the data exchange.

When building constructions, typically, formwork panel structures are used, to be filled with concrete in a subsequent processing step. For this purpose, the formwork panels have to be aligned to each other to build a wall -like structure. It is possible to connect a plurality of such formwork panels, each adjacent to each other in both, the vertical and the horizontal direction. In the process of construction, it is necessary to exchange data with the system on site. For instance, a user, monitoring the construction process, working at secondary computer system, wants to know, which particular formwork panel has already been positioned in the formwork structure and placed adjacent to which other and which particular another formwork panel still needs to be erected. Further, it would be helpful to have information on e.g., how long the panel is already in use in the particular structure. In particular, it would be helpful to have a measure on how much time the individual panel was stored compared to how much time it has been in use. Also, the physical state of the materials, e.g., hardening of the concrete, would be of interest to improve the quality of the constructional process. Moreover, it would be helpful to get the possibility to provide data to each of the particular form work panels, for instance for instructing them to execute specific functions (for instance to acquire additional sensor data or to transmit specific control data to other panels).

In state-of-the-art systems, the formwork panels did not comprise any electronics so far. Thus, up to now it was not possible to transmit data to/from the formwork panels. KR 2016 0116892 A discloses a formwork with laser transmitters and laser receivers for detecting a physical variation of the formwork.

Further, in such settings, typically, several electronic systems are used, like for example control units for controlling a crane for positioning the formwork panels, position detection systems, mobile phones, used by the workers et cetera. Therefore, a radio-frequency-based signal transmission is susceptible to faults and has a risk of a bad signal to noise ratio. The signals could even be manipulated.

Moreover, since a huge amount of such panels are to be used in building constructions, production costs should be kept as low as possible. Thus, it is necessary to provide a solution with low costs and which is not dependent on requirements and/or standards which need to be fulfilled when using radio-frequency-based (RF) signal transmission. So, panel to panel communication should not necessitate RF-based signal transmission. Further, it would be beneficial to have an autonomous system with respect to power supply.

In particular it would be beneficial to provide an option for signal exchange between the formwork panels used in building constructions and a secondary electronic system, e.g., a monitoring computer at low cost. Moreover, the quality of the signal exchange should be improved. Further, signal transmission should not be susceptible to interference or transmission errors.

An object of the present invention therefore is, to improve known formwork systems and in particular to improve quality of building constructions, using formwork panels.

This object is solved by the subject matter according to the independent claims, in particular by a formwork panel according to claim 1, a method for operating a master light hub according to the independent claim 4, a method for operating a slave light hub according to independent claim 12 and a system according to claim 14.

According to a first aspect, as defined in claim 1, the invention relates to a formwork panel used for building panel constructions comprising a plurality of formwork panels, the formwork panel comprising:

- A hollow structure, which is used for forming light channels within the formwork panel, extending in at least two axes, wherein the at least two axes are configured to have an intersecting area;
- A light hub, positioned at the intersecting area inside the formwork panel, such as the light hub and in particular its surfaces are facing and engaging with (from a signal transmission point of view) the light channels, and wherein the light hub comprises at least a light source set and a light receiver set and a microcontroller, coupled to the light source set and the light receiver set for controlling operation of the same;
- wherein each formwork panel provides panel data, comprising a unique identifier;
- wherein the microcontroller is configured to control operation of the light hub and in particular the light-based signal exchange to and from at least one other light hub in at least one other formwork panel, placed adjacent to the formwork panel in the panel construction according to at least one predefined protocol,
- wherein the protocol defines how to convert the panel data and in particular different types of panel data in light pulses and vice versa.

With this solution, the formwork panels may be made "smart" and may be addressed in a digital form to send and/or receive data. The signal transmission is light-based and thus completely safe and not susceptible to transmission errors or to external manipulations (as a RF based transmission would be). Formwork panels equipped with the light hub, positioned adjacent to each other in the formwork construction will be able to communicate data between them using light pulses inside the structural members.

In sum, the present invention relates to a system for light-based signal exchange between a plurality of formwork panels. The formwork panels are each equipped with a light hub which serve to transmit light pulses in a light channel inside the formwork panel to the directly adjacent panels. Respective acknowledgment signals are received in order to discover the existence of the other light hubs being present in the constructional setting. All the signals are aggregated in one master light hub which is in data exchange to a main unit, which may serve as gateway to a secondary computer system. The data transmission is executed according to a predefined protocol.

At a building site, typically, there are hundreds or thousands of panels. Installing a unit with radio module, antenna and a battery in all of them would drive tremendous cost. A battery also has a limited life span. With the suggested innovation, production cost is kept at an absolute minimum while also eliminating the battery. The other key feature is that the panels actually know where they are placed in relation to each other In an imagined system with a large number of panels that instead would utilize radio communication between the individual panels there would be no way of determining exactly in what configuration the respective panels are attached to each other since an exact direction to the individual radio transmitter would not be easily determined. Furthermore, such a system would create a significant amount of radio smog.

Light hubs send and/or receive light form directly adjacent light hubs. A master light hub may send and/or receive signals to directly adjacent light hubs, encoding an instruction to propagate the signal (encoding data) to further light hubs and to aggregate corresponding responses to be sent back to the master light hub. In this way, the master light hub may prepare each slave light hub in the system for communication and for unidirectional or bidirectional data exchange.

A formwork panel is a nearly plate-like structure which X and Y dimensions are much bigger than a Z dimension. It is made of wood-based material or may be provided as Plywood. Plywood is made of thin veneers, which are glued together crosswise. The fibers, which are thus arranged at right angles, reduce the swelling and shrinking behavior of the board and contribute to the advantageous technical properties of this material. Depending on the type of wood used, multiplex boards can be characterized by their low dead weight combined with good strength values. Coatings and finishes underline or modify the natural appearance of the wood at the same time. The formwork panel may be used as a support structure forming hollow chambers. The formwork panel may form a hollow structure. According to a preferred embodiment of the present invention, the hollow structure is used for light-based signal exchange. Usually, the formwork panel is used as module in a composite of a plurality of formwork panels by erecting a panel construction, which may be filled with concrete in a later step.

A light channel is formed in the hollow structure for light exchange or light-based signal exchange directly in the formwork panel. Alternatively, or cumulatively, the light channel may be at least in part implemented as light carrier(s) such as plastic and/or glass fibers within the formwork panel and in particular within the hollow structure. In case the hollow structure and a light carrier are used, corresponding optical coupling devices are provided as well. In specific embodiments, the light channels may be angled, due to the angled positioning of the formwork panels. In order to make sure, that light still can be transmitted in the light channels, further optoelectronic devices may be used, like light pipes. Light pipes are optical components used to transport light from a light source set, in particular a board-mounted LED set, to the target point where the light is required (adjacent light hub). They give greater flexibility of light distribution, allowing to change the position of your LED light without changing the location of the LED itself. Most LED light pipes are panel mounted or press fit, making them easy to install. Further, Fresnel lenses may be used.

A hollow structure is a structure within the formwork panel and may define a three-dimensional passage or hollow volume within the formwork panel, in different forms, e.g., as a cylindrical structure. The hollow structures and/or light channels are preferably configured to be perpendicular to each other, e.g., there is a hollow structure / light channel extending in the x axis (horizontally) and another hollow structure / light channel extending in the y axis (vertically) of the formwork panel. The two hollow structures and its light channels are intersecting in an area in the middle of the formwork panel. With these two directions (in x axis and y axis), the light hub, positioned at the intersecting area is in signal exchange with the four channels (up, down in the first direction and right and left in the second direction). Other configurations are possible. Preferably, the hollow structure extends over the whole width and/or height of the formwork panel. The hollow structure serves as data carrier for light signal exchange. Preferably, the hollow structures are completely encapsulated within the formwork panel and no daylight may enter. Signal exchange within the hollow structures uses visible or invisible light for communication. Preferably, for panel-to-panel communication (which corresponds to light hub to light hub communication), line-of-sight propagation is used.

The light hub has a rectangular or box-like form with six (6) main surfaces. Four (4) of these surfaces are configured to face into the four light channels (up, down, right, left) and are configured to close and lock up the respective light channel or the hollow structure so that all light signals being transmitted in the light channel are completely absorbed by the light box. This makes sure, that no light signals may by-pass the light hub.

The light hub is positioned or inserted in the hollow structure, in particular at the crossing of the light channels of the formwork panel. The light hub is configured such that its dimensions nearly corresponding to the ones of the hollow structure or light channel in which it is inserted. The light hub needs to block incoming light in one direction. When the light hub is inserted in the formwork panel it should totally block the hollow structure. For this purpose, soft plastic may be used in the back.

A light hub is an electronic module, in particular a microcontroller-based unit. The light hub may be provided as embedded device. The light hub has light transmission capabilities (data exchange via light). The light hub is configured to send light pulses according to a pre-defined protocol to other, in particular adjacent, light hubs in other (adjacent) panels. The light hub is further configured to receive light pulses from other, in particular adjacent, light hubs in other (adjacent) panels. The microcontroller is configured to generate light pulses according to a pre-defined protocol for encoding panel data. A light hub may be configured to act in two different roles: as master light hub or as slave light hub. The master light hub serves as interface to the main unit, whereas the slave light hubs do only provide light-hub-to-light-hub communication (or panel to panel communication) and do not interface with entities outside of the panel structure.

Generally, any light hub has the technical capability to become a master light hub when a main unit is attached or for example when the system is idle and one of them on its own initiative decides that it is most suitable to begin collecting data. At least four surfaces of the light hub are configured for light signal exchange (when used as slave light hubs). Usually, however five surfaces are configured for light signal exchange for including the signal exchange to the main unit, in case the light hub is used as master light hub and the respective signal exchange between the master light hub and the main unit should also be based on light transmission.

The light hub is configured for light-based transmission. The communication will consist of light pulse trains timed with a certain clock frequency, for example 50 Hz. For every time unit one bit is communicated. For example, an LED being on would signify a binary one (1) and the LED being off would signify a binary zero (0).

In a preferred embodiment, a so-called Manchester code (also known as phase encoding, or PE) is used. This is a line code in which the encoding of each data bit is either low then high, or high then low, for equal time. It is a self-clocking signal with no DC component. Consequently, electrical connections using a Manchester code are easily galvanically isolated.

In another preferred embodiment, a cyclic redundancy check (CRC) is used. This is an error-detecting code commonly used in digital networks and storage devices to detect accidental changes to raw data. Blocks of data entering these systems get a short check value attached, based on the remainder of a polynomial division of their contents. On retrieval, the calculation is repeated and, in the event the check values do not match, corrective action can be taken against data corruption. CRCs can be used for error correction.

CRCs are so called because the check (data verification) value is a redundancy (it expands the message without adding information) and the algorithm is based on cyclic codes. CRCs are popular because they are simple to implement in binary hardware, easy to analyse mathematically, and particularly good at detecting common errors caused by noise in transmission channels. Because the check value has a fixed length, the function that generates it is occasionally used as a hash function.

Usually, the formwork panel is already equipped with a light hub, when being erected. However, for providing a more flexible system, it is also possible to have the light hubs exchanged during the system's usage. Thus, it is possible, to have a formwork panel within the building construction with a first light hub being integrated in the formwork panel and to take this first light hub out of the structure and replace it by a second light hub, e.g., for providing alternative or additional capabilities of the light hub. In this context, for example, other or additional sensor data may be processed. Also, another type of protocol may be provided to the light hub by changing the modular sensor attachment and / or possibly by installing a new software package for processing the other or additional sensor data.

Generally, the light hubs are modular and may be replaced during the systems operation, and in particular even after the formwork panel has been erected. A light hub can easily be detached from and attached to the formwork panel, using a screwdriver to manipulate a locking mechanism. Once removed, a special tool can be used to create a small opening in the formface within the panel through the opening the light hub was mounted in. Preferably, every light hub is attached in the formwork panel such that there is an inspection access, e.g., to replace modular structures on the light hub, like e.g., accumulators or batteries, if necessary or to replace the whole light hub.

Further, the light hub may be equipped with a modular sensor attachment or unit. The modular sensor attachment can be of different types, such as a temperature sensor, a pressure sensor, ultrasonic sensors, or any other type of sensor to be used in the construction. With the modular sensor attachment attached to the light hub it can again be fitted to the formwork panel so that its modular sensor attachment protrudes through the form face inside the cavity that will be poured with concrete in order to acquire sensor data of different types. The modular sensor attachment will then extend the already existing functionality of the light hub so as to measure e.g., properties of the hardening concrete utilizing the light hub as a means to transfer data to a secondary system using light signals inside the construction system (panel-based system), to be possibly transmitted over several hops (jumps) or nodes (here: light hubs).

A light source set is an electronically controllable unit for emitting light. The light source may preferably be a set of LEDs. Alternatively, or cumulatively, the light source may be a laser for emitting coherent light. The set of light sources may be distributed over four of the six surfaces of the cuboid structure of the light hub, namely the four ones, facing the light channels. In case an optical transmission is to be executed between the master light hub and the main unit, the set of light sources and the set of light and receivers is positioned on the front side of the light hub as well, for communication with the main unit.

A light receiver set is an electronically controllable unit for receiving light. The light receiver may in particular and preferably be a phototransistor in order to get fast rise and fall times. Alternatively, or cumulatively, a photo diode or another type of semiconductor device that converts light into an electrical current. In particular, a combination may be used in order to wake the microcontroller from its sleep mode in the wake mode.

The light source set (emitter) and the light receiver set are controlled by the microcontroller according to a predefined interaction process or protocol. For this purpose, a specific type of corresponding emitters and receivers might be used and activated. The interaction process may be based on transmitting or exchanging pulses of light according to a predefined protocol. In a preferred embodiment the system may be used with filters, provided in the formwork panel structure. For example, a first filter may be selected for transmitting panel data, e.g., indicating a first angle which is enclosed between the two panels (e.g., indicating, that the formwork panels are erected with an angle of 120°). Alternatively, or cumulatively, the protocol defines segments for transmission of various panel data. Thus, it may be defined to transmit a first segment which may be selected for transmission of the unique identifier of the respective formwork panel and a second segment for another type of panel data, like sensor data, e.g., temperature, acquired locally at the panel. So, within the system, it can be detected and identified which sensor data has been acquired on which panel. Moreover, a timer may be provided, so that all panel data comprise a time stamp. So, it also can be deduced, when the panel data have been detected. All data is aggregated on a master formwork panel, which serves as communicator port or interface to the central main unit, being temporarily attached to the master formwork panel.

The microcontroller comprises a processing unit for executing a software for controlling signal exchange and storage of data. The light hub usually comprises an A/D - D/A converter for converting light signals or impulses into digital signals, which may be stored locally and transmitted externally. Each light hub may preferably comprise a memory for storing digital data. In particular a registry is used to store digital transmission data relating to any of the four directions. The memory may also be configured to store at least one program for controlling exchange of panel data. The microcontroller may optionally comprise other units. The microcontroller is coupled to the light source set and the light receiver set for controlling their operation.

Panel data are data, being panel specific or panel internal. Panel data typically differ from panel to panel. Further, panel data differ over time. Panel data comprise a unique identifier of the particular panel. Panel data may comprise other data types, like status data or path data or position data. Status data refer to a physical status of the formwork panel. Status data may comprise data acquired by a set of formwork internal sensors, like temperatures sensors, humidity sensors, pressure sensors and the like and thus comprise temperature data, humidity data, pressure data etc. For each of the different status data types a type specific protocol definition or structure is provided for conversion of the panel data in light pulses for data exchange. Panel data may comprise usage data (defining, how old the panel is), time in use (defining how long the panel is already in use within the building construction), time stored (defining how long the panel has been stored in a stock without use). Panel data may comprise vibration data, audible data and/or solar radiation. Solar radiation data refer to power supply from the photovoltaic panel. Solar radiation data may be an indication of the energy which is provided locally on the panel, i.e., on the light hub. All energy data of all panels may be used to balance the energy level of the whole system. Further, the panel will keep track of its state, being active or dormant.

Data exchange between the formwork panels is executed by means of the light hubs, integrated in each panel. Data exchange is exclusively light based. No electrical signals need to be exchanged.

Data exchange between the master light hub of the formwork panel and a main unit may preferably be based on light, too. Then, the locally stored digital data on the master light hub are to be converted again back into light signals. The protocol for the signal exchange between the master light hub and the main unit may be a second protocol. The second protocol may be identical to the first protocol, used for panel-to-panel communication (light hub to light hub communication, respectively). The light-based signal exchange has the advantage that the connectors are less expensive and cannot break. Alternatively, or cumulatively, data exchange between master light hub and main unit may be executed by another temporary or non-permanent interface (electric connector or plug-in, e.g., like USB etc.).

The interface between master light hub and main unit may also be USB or specific electrical connectors for digital data exchange.

Preferably, the light hubs, in particular the slave light hubs, are supplied with power by means of using a photovoltaic cell (PV cell) at the outside of the formwork panel for providing voltage which may be harvested in an accumulator, capacitor and/or supercapacitor. Thus, energy supply is provided locally on the light hubs. There is no need to provide cables for energy supply. Alternatively, or cumulatively, the light hub may comprise a battery for power supply. Alternatively, or cumulatively, energy harvesting devices may be used in the light hub to provide energy locally, which may be based on e.g., thermal energy, wind energy, salinity gradients, vibration-based methods, and/or kinetic energy.

In a preferred embodiment, the light hub, in particular the master light hub, may be provided with photovoltaic energy by using light sources, provided in the main unit when the main unit is attached to the master light hub. For this purpose, the main unit may be equipped with e.g., a set of light emitting diodes (LEDs). The surface of the formwork panel at the intersecting area is therefore made of translucent material, e.g., plastic material, for enabling light transmission, so that the master light hub may charge with energy (light) from the main unit.

According to a preferred embodiment, the light channels, in particular the hollow structures are extending over the complete width and height of the formwork panel.

Typical sizes of a formwork panel may be several meters in width and height, forming a flat cuboid structure. A typical formwork panel has a height of 3,6 m and á breadth of 2,7m. Smaller panels have a height of 0,15m and a breadth of 0,05 m. The hollow structure may have a diameter of 100mm to 670mm. Other dimensions are possible.

According to another preferred embodiment, the light hub may be implemented as slave light hub or as master light hub, wherein the slave light hub is configured to communicate exclusively via light pulses with other light hubs and wherein the master light hub is configured to aggregate all data from all slave light hubs and to communicate with a main unit, being non permanently attached to the master light hub.

According to another preferred embodiment, the protocol defines a signal exchange between the network nodes (in particular the master light hub, the slave light hubs, the main unit and optionally a secondary computer system) an defines how to convert the panel data and in particular different types of panel data in light pulses and vice versa.

According to another aspect, as defined in claim 4, the invention relates to a method for operating a master light hub (master method) for signal exchange between a plurality of formwork panels as described above (in which a light hub is implemented as slave light hub or as master light hub), comprising the steps of:

- Providing panel data with a unique identifier of the formwork panel locally at the formwork panel;
- Converting the provided panel data to a sequence of light pulses according to a predefined protocol and
- Emitting the sequence of light pulses to slave light hubs in directly or indirectly adjacent formwork panels;
- Receiving a sequence of response light pulses from the slave light hubs in response to the emitted sequence of light pulses; wherein the emitted and/or the received sequence of light pulses also encode(s) or include(s) the panel data (the latter feature serves to identify the light hubs and their transmitted signals);
- Aggregating all received response light pulses and
- Generating a result, encoding the aggregated received response light pulses.

The response is a locally stored data structure, e.g., a registry with light hub specific entries. The response may be transmitted to the main unit as a digital signal, preferably prepared for digital data transmission (e.g., compressed). The response may also be converted back to light signals to be transmitted to the main unit.

According to a preferred embodiment, a fallback mechanism is applied in the system and methods according to this solution. The fallback mechanism assures that each panel first and foremost creates a record of his immediate adjacent neighbors or surrounding before executing any other function and in particular before issuing a discovery procedure. This helps to have a backup of the data, already gathered, even if one or more panels run out of power and may no longer be used for transmitting data.

If a beacon procedure has been executed before and was successfully finished, in the discovery procedure, new data may be exchanged between the light hubs. In the beacon phase only the unique identifier of the respective light hub needs to be exchanged, whereas in the discovery phase additional data, e.g., sensor data and others may be exchanged, too. Thus, the beacon procedure serves as a handshake to make sure that receiving light hub is existent on the other and of the communication channel.

In another preferred embodiment, the beacon procedure may also be used to try different wavelengths for signal transmission (transmission frequencies), in order to find the best SNR (signal to noise) ratio. This helps to improve quality and may take into account the specific settings of the constructional site (for instance disturbing daylight, entering the hollow structure, a multitude of optoelectronic devices, including filters, for transmitting light in angled light channels etc.). Particular embodiments relate to providing a set of light sources with different wavelengths.

The light pollution in one direction could be completely different than in another. The beacon is unique for the direction (light channel). It might also happen that an older panel is found by the beacon in one direction and a newer by the beacon in another direction. The light hub would then adapt to use the light frequencies, power and protocol version needed in each individual direction. The system knows in what direction light is received and sent (and in which wavelength) and thus the system knows in what direction it is communicating since the respective emitters and receivers are physically separated in each direction, in particular one set in each direction is addressed in the software by a variable d (for direction).

Providing different wavelength light sources commonly or correspondingly on all sides of the light hub, may be used for reducing the effect of the light pollution entering the hollow structure, so that light is emitted in frequencies not found in the pollution to enhance signal to noise ratio as an advantageous technical effect in the signal transmission

The predefined protocol may be defined in a configuration phase and before implementing the light hubs within the light channels, in particular with the hollow structures. The protocol may be updated at a server side and provided by a separate data transmission channel (e.g., RF based, via WLAN or another type of wireless network connection) to the light hubs. According to a preferred embodiment, firmware updates may be distributed to the formwork panels. This may be done, when the system has completed a so-called *path functionality* (which will be described in the detailed description) and there is an abundance of power they will start an update process using the latest firmware found on a panel in the network.

Another way would be to remove the light hub from the formwork panel or to remove a front cover of the formwork panel covering the light hub and temporarily plug-in a cable or another connector to re-flash the microcontroller (e.g., MCU) from a computer, programmer or maybe the main unit.

The protocol may comprise a wakeup signal exchange, indicating that the respective panel (identified via its unique identifier) is there and is integrated in the formwork panel structure, erected so far. The wake-up may be implemented using discrete components. The protocol may use a beacon signal. During the beacon, the sending light hub will burst full power for a set amount of time. This will be enough to charge a small capacitor through a network of resistors finally triggering a pulling of a reset pin on the microcontroller - in effect waking it up. The protocol may comprise a segment for encoding how much power is left on the light hub, indicating the necessity of power supply. The protocol may also comprise additional segments, encoding other types of panel data, in particular, sensor data, acquired locally at or in the respective formwork panel (e.g., temperature, chemicals inside the formwork panel, pressure, deflection and other physical signals).

According to a preferred embodiment, the master method further comprises:

- Transmitting the generated result to an external unit, in particular to a main unit, being non-permanently attached to the master formwork panel. The master formwork panel is defined as the panel, which carries or supports the main unit. As already mentioned before, is light hub is defined as master light hub.

According to a preferred embodiment of the master method, the protocol may be based on a challenge response protocol, wherein generated light pulses serve as challenge light pulses and are sent by the light source set to slave light hubs in other formwork panels, which are acknowledging receipt of the same by sending response light pulses back.

According to a preferred embodiment of the master method, emitting is done in four directions, in particular one at a time, and wherein the sequence of light pulses is specific for four directions and may comprise a direction identifier.

The sequence of light pulses may be sent from each light hub in four directions, in particular in an upward, downward, right and left direction. For this purpose, the light hub has a box-like shape with six (6) surfaces, wherein at least four of them are configured with light emitters and receiver respectively for sending/receiving light pulses in/from the light channels, in particular, the hollow structure, which the respective surface of the light hub box is facing at. Only one light hub, namely the master light hub, is configured to transmit light in an additional direction which is in Z direction, being perpendicular to the X and Y direction of the formwork panels extension. The master light hub is configured to transmit light to and / or from the main unit in time phases, during which the main unit is attached to the master light hub. As already described above, any light hub has the technical capability to become a master light hub when a main unit is attached or for example when the system is idle and one of them on its own initiative decides that it is most suitable to begin collecting data. This could for example be "IF Idle for more than x hours AND there is no adjacent panel to the left or down (that is the light hub is in the bottom left corner) THEN become self-appointed master".

According to a preferred embodiment of the master method, the method comprises:

- Initiating a beacon procedure for performing a handshake procedure for initiating communication with adjacent light hubs and for preparing the master light hub and the respective slave light hub(s) for communication;
- Initiating a discovery procedure for identifying all directly adjacent slave light hubs and determining their position in each of the four directions as first intermediate result;
- Initiating a path function for identifying all slave light hubs, in particular, by propagating the path function in the network of light hubs as second intermediate result;
- Aggregating all intermediate results(in particular fist and second) of the discovery procedure in all four directions and generating a result, which is stored as result data structure in digital form locally in a memory.

The method is configured to send the "wake-up" burst in effect waking-up the other light hubs (dormant -> awake state). Then, the light hubs may interchange a "Is any one listening? "signal exchange and then exchanging information relating to: "What version of the protocol should we use?". After this, the light hubs may proceed with testing frequencies and local power supply. If this has already been established during earlier beacons (exchanges in earlier sessions) the light hubs may resume using that "earlier" (stored) data until something fails.

The discovery procedure or function is only focusing on directly adjacent light hubs (neighbours). The path function will identify all slave light hubs in the network of light hubs.

According to a preferred embodiment, the beacon procedure comprises the steps of:

- Sending a beacon signal in each of the four directions to each adjacent light hub with a unique identifier;
- Receiving a response to the sent beacon signal (void or acknowledge signal);
- Storing the unique identifier of the light hub from which an acknowledge signal has been received.
- Optionally, the discovery procedure may be initiated.

According to another preferred embodiment, the method may comprise adjusting frequency and/or power of the emitted sequence of light pulses, in particular of the beacon signal, to optimize both of a signal to noise ratio and an energy consumption. With this, the frequency and/or power are adjusted such that as less as possible power will be consumed by providing a sufficient signal to noise ratio. This adjustment step is preferably performed for the beacon signal.

According to another preferred embodiment, executing the discovery procedure by the master light hub comprises executing a path function, comprising:

- sending a unique identifier to the adjacent slave light hubs in each of the four directions;
- in response: receiving the unique identifiers of the adjacent slave light hubs as response message;
- storing the response message with an indication of the direction.

According to another aspect, as defined in claim 12, the invention relates to a method for operating a slave light hub (slave method) for signal exchange between a plurality of formwork panels as described above (wherein the light hub is implemented as slave light hub or master light hub), comprising the steps of:

- Receiving a beacon signal from an adjacent light hub;
- In response to the receipt of the beacon signal: Transferring the slave light hub from a dormant state in an awake state;
- Acknowledging the receipt of the beacon signal;
- Transferring the slave light hub from the awake state in the dormant state by applying a transfer function;
- Receiving a discovery signal from an adjacent light hub;
- Propagating the received discovery signal to an adjacent light hub in the same direction until a last light hub in said direction is reached and incrementing a counter locally for each aggregated unique identifier.

According to a preferred embodiment of the slave method, the transfer function considers actual power resources of the light hub. So, the change from awake to sleep/dormant state may be in the range of 12 hours or several seconds, depending on the mode of the light hub and its available power.

According to another aspect, as defined in claim 14, the invention refers to a system for light-based signal exchange between a plurality of formwork panels used in building constructions to build a panel construction, with:

- A plurality of formwork panels as described above, which are to be erected to build a wall-like structure;
- wherein one of the plurality of formwork panels is configured as master formwork panel and its light hub is configured as master light hub, which serves as interface to a main unit and which is operated with a method for operating a master light hub as described above;
- At least one main unit for the plurality of formwork panels, which is temporarily attached to the master formwork panel for signal exchange with the master light hub.

In a preferred embodiment of the system, the main unit is at least temporarily coupled to a secondary electronic system via a wireless protocol for data exchange.

The main unit is a separate electronic unit, which may non-permanently attached to the outside of the master formwork panel for the purpose of signal exchange or transmission.

The main unit may comprise attachment means for attachment of the main unit at the master formwork panel (with the master light hub) such that signal exchange may be carried out. The attachment means may comprise a clamp to secure the main unit to the formwork panel so that the back is in direct contact with a master light hub. The main unit provides digital interconnectivity (data transmission) in the direction facing the master light hub by the means of sending and receiving electromagnetic radiation in the infrared frequency range.

For power supply, a large panel with a multitude of photovoltaic cells is provided in order to harvest energy from incoming sunlight mounted by the means of a hinge for direction towards the sun during use. When not in use the panel is collapsed so that it is flush with a main unit body. A rechargeable battery for the storage of harvested energy or from an intermittently connected external power source may be provided, too. Further, the main unit is equipped with a radio transceiver and a multiband antenna for digital data two-way radio communication to a secondary system (i.e., the Internet or optionally any other compatible system such as a Data Acquisition System). Optionally, connectors may be provided for temporary optional external power supply or optional serial data communication to any other compatible device, also including a display device, which may be used for reading sensor or other panel data locally on site. Moreover, persistent internal memory, high order data management and rudimentary user functionality for example using buttons or a graphical display, as mentioned above, may be configured.

According to a first embodiment, signal exchange may be based on light pulses only. In a second embodiment, signal exchange is based on a wireless protocol, being implemented by using radio frequency (RF), like being based on IEEE 802.11 standard. Here, RF-based near field communication may be used (NFC). Alternatively, wireless personal area networks (WPANs) may be used to connect the master light hub with the main unit (within a relatively small area, when being attached). For example, Bluetooth, ZigBee and/or other Wi-Fi integrations or other data exchange architectures may be used. Alternatively, a wired connection may be used, like a USB interface in one of different generation types, e.g., USB-1 to USB-4.

The attachment means for attaching the main unit to the master light hub may be based on magnetic fasteners. The attachment means may be implemented as plug-in connection so that the main unit may be attached to the master light hub by simply clicking in. The main unit is preferably fastened to the panel in two stages - guiding pins and possibly magnets that aligns it perfectly and then by means of a clamping mechanism that firmly secures it in that position

The light hubs are fastened to the panel by the means of spring actuated "hooks" that can be released by using a special tool or a screwdriver.

The main unit may be provided with energy by means of photovoltaic cells, provided on the surface of the main unit. Alternatively, or cumulatively, the main unit may comprise a local battery and/or may use different types of energy harvesting methods, mentioned above.

According to a preferred embodiment, the interface between the master light hub and the main unit is bidirectional and configured to send and/or receive data.

Usually, mainly signals will be sent from the master light hub to the main unit. The main unit, in turn, may be connected to a secondary computer system (e.g., a server with a user interface so that a user may monitor the whole construction site with the actual and past status of the formwork panel construction. So, the user may identify, e.g., at a remote site, which panel is attached to which other panel by also providing position information. On the secondary computer system, a building information model may be run for planning and visualizing the status of the constructional site.

In specific application, signals may be sent from the main unit to the master light hub and via the master light hub to connected slave light hubs. These signals may encode control signals, e.g., for activating/deactivating certain sensors and/or for updates of a protocol.

By providing a light-based or optical signal exchange between the panels, the technical advantage is that signal exchange is completely independent of RF standards. Further, the system is not susceptible to radio noise. No cables, no antennas are needed of signal exchange.

According to another preferred embodiment, the master light hub communicates with the main unit and/or with the slave light hubs via light pulses.

The interface between the master light hub and the main unit may preferably be an optical interface. However, alternatively, the interface may be another wired or wireless interface. The interface between the slave light hubs is exclusively based on light signals. The interface between the slave light hubs and the master light hub is also exclusively based on light signals.

The interface between master light hub and main unit may also be USB or electrical connectors for digital data exchange.

As mentioned above, the master light hub may be supplied with power by the main unit or by an autonomous local power supply system (e.g., photovoltaic cells) and/or may be equipped with a battery and/or wherein the slave light hubs may be supplied with power locally by an autonomous power supply system and/or may be equipped with a battery.

According to another preferred embodiment, at least one of the formwork panels has a corner structure with a particular angle and wherein the system further comprises reflectors and/or light filters, attached in the light channels of the formwork panel in order to provide light exchange also in angle structures.

According to another preferred embodiment, the signal strength of the transmitted light signals, exchanged between the light hubs is determined and processed and/or wherein filters are placed within the light channel, for activating remedy measures in case at least one of the formwork panels is not equipped with a light hub or one slave light hub has not sufficient power. In some formwork panel structures, so called spacer blocks or other passive members may need to be integrated, in which no light hub may be integrated, because e.g., the width is too small. Then, the length for signal transmission is longer and correspondingly the signal strength is lesser. Therefore, the signal strength is captured in order to deduce the use of passive formwork panels (e.g., spacer blocks and the like). So, the user may know, where (position information) and how many passive members (panels without a light hub) are used in the structure.

Further, filters may be provided instead of a light hub. The filters may be configured specifically, e.g., to filter out certain wavelengths of the transmitted signals. For example, in case of a red-light filter is used, the red light is received with significantly higher signal strength than the other colors. With this information, it can be identified, which passive element is positioned and where.

## BRIEF DESCRIPTION OF THE FIGURES

Further features and advantages will become apparent with the detailed description of preferred embodiments in reference to the figures.

FIG.1 shows an exemplary formwork panel construction with several light hubs;

FIG.2 depicts a schematic representation of a network of light hubs in optical communication connection according to the example construction of Fig. 1;

FIG. 3 shows a light hub;

FIG. 4 shows more details of a possible construction of a light hub;

FIG. 5 is a structural figure for a light hub in form of a block diagram;

FIG. 6 is a block diagram of a main unit;

FIG. 7 shows more constructional details of main unit according to a preferred embodiment;

FIG. 8 shows an attachment of the main unit to a master light hub according to a preferred embodiment;

FIG. 9 shows a corner structure of the formwork panels with reflectors for signal transmission;

FIG. 10 is a flow chart for signal exchange by executing a discovery function;

FIG. 11 is an interaction diagram for signal exchange between the involved lights hubs of the discovery function;

FIG. 12 is a flow chart for executing a path function;

FIG. 13 is an interaction diagram for signal exchange between the involved lights hubs of the path function;

FIG. 14 is a flow chart for executing a send function;

FIG. 15 is an interaction diagram for signal exchange between the involved lights hubs of the send function;

FIG. 16 is an exemplary representation of registry entries for an executed send function;

FIG. 17 is a flow chart for a method for operating a master light hub mLH according to a preferred embodiment.

FIG. 18 is a flow chart for a method for operating a master light hub mLH according to another preferred embodiment.

## DETAILED DESCRIPTION OF EMBODIMENTS WITH RESPECT TO THE FIGURES

The present invention relates to providing a reliable signal exchange between a set of formwork panels, used in building constructions, which may be used to create a temporary structure that can be filled with concrete, in effect creating a permanent concrete solid, once the panels are removed. Further, signal transmission should also be possible to an external computer system to exchange digital (or analogue) data. Generally, signal transmission should be bidirectional.

The signal transmission is an optical transmission and based on light signals. This has the major technical advantage, that signal transmission is not susceptible to disturbances and failures and thus provides a high degree of reliability. Further, the costs for producing such formwork panels with the electronics inside, may be kept as low as possible.

### Embodiment(s) for the Protocol:

The light hubs LH sleep most of the time to preserve the available energy in the capacitor and / or battery. When awake, they can be either INACTIVE (alone and not used), ACTIVE (adjacent to another), DISCOVERY (trying to get to know the closest neighbor in each direction), MASTER (having a Main Unit docked on top), PATH (finding the paths to as many neighbors as possible only limited by available power).

They wake up when a timer (tmr: timer) tmrBeacons overflows after a set amount of clock cycles (the SLEEP time), which may be preconfigured. According to a preferred embodiment, the timer may be adapted according to a detected power signal, indicating the actual power supply of the respective light hub LH.

At each tmrBeacon overflow they store how long time they slept INACTIVE (DORMANTCOUNTER) or any other mode (ACTIVECOUNTER). This serves as a record over how much time they have spent mounted on a site and how much time they have been stored and haven not been used.

The SLEEP time is a function of the MODE, current Power level and the results of earlier activities. The main idea is to preserve as much power as possible for data transmission.

The first thing a light hub LH will do when it wakes up is to send out a beacon - basically a burst of light with rudimentary handshake functionality.

If it finds a neighbor (adjacent light hub LH) answering its beacon they will initially just share each other's identifying ID.

If a light hub LH gets a Main Unit MU on its back it will switch to PATH mode and try to map the whole network by spreading the PATH mode. All light hubs LH that are in PATH mode will explore their surroundings.

All path data will ultimately be aggregated at the light hub LH first issuing the PATH mode.

Once path information is available and communications partners are prepared for signal exchange, this can be used to send and receive messages within the network of paths.

The light hub communication is based on four basic functions.

1. Beacon

A light hub LH will signal its presence and try to initiate communication with adjacent light hub's on timed intervals. The Beacon procedure will perform a handshake and prepare both ends for further communication.

The discrete electronics in the light hub is configured such that a beacon can awake the microcontroller from its sleep mode.

2. Discovery

A light hub LH will present its own ID to adjacent light hub's and in turn also store their corresponding ID's.

3. Path

A light hub LH will request data stored in the adjacent light hub's direction registers. Data will be sent in the order of the count. The receiving light hub will automatically add path data corresponding to the source direction onto the path data received. A request of a non-existing count will result in a transferpathRefuse.

4. Send

A light hub LH can send data to another light hub using the ID and path data. The payload of the Send function will be relayed by the light hub's in the path.

Each light hub LH is uniquely numbered during manufacturing. The length of the ID has to be long enough to ensure a total uniqueness of all manufactured light hub's but short enough as to not create to heavy data loads on the system. As an example, an ID with the length of four bytes would enable up to 4 294 967 295 uniquely numbered light hubs.

The unique identifier (ID) is within:

0 <= 4 294 967 295
*or in hexadecimal*
00 00 00 00 => FF FF FF FF.

Directions in the system are labeled d and stored in the path information using two bits. To increase readability, symbols are used below.

$$d_n \ (0 \leq n \leq 3)$$

*where*

| | |
|---|---|
| n = 0 | Down |
| n = 1 | Left |
| n = 2 | Right |
| n = 3 | Up |

*or in binary*
n = 00 Down
n = 01 Left
n = 10 Right
n = 11 Up

Example path:

| | | |
|---|---|---|
| Represented | in symbols | ▼◀▶▲ |
| | In plain words | DOWN\|LEFT\|RIGHT\|UP |
| | In binary | 0b00011011 |
| | In hex code | &h18. |

Each light hub LH has four registers, one for each direction ($R_n$ ($0 \leq n \leq 3$)). When an adjacent light hub LH has issued the DISCOVERY the responding light hub LH will in turn issue a DISCOVERY on all other available light hubs LH next to it. When a DISCOVERY has been issued and trickled around in the grid each has the ID (identifier) of adjacent light hub LH's stored on the first position in each corresponding Path Register.

The initial discovery serves as a first mapping and a resort should any light hub LH in the grid run out of power until a full PATH command has been issued.

The first column in the registry is merely an index unique to the individual register. The count is a counter irrespective of direction and common for all four registers - it is based on the $Count_{LOCAL}$ variable. The ID is the unique ID's of light hub's chained in the registry direction. The path is the actual path data needs to travel in order to reach the corresponding light hub LH. The paths are stored as directions encoded as a two-bit number (0-3).

The registry schematically looks like:

| pos | count | ID | path |
|---|---|---|---|
| $p_0$ | $c_0$ | $ID_0$ | $h_{0:0}$, $h_{0:1}$, $h_{0:2}$, $h_{0:3}$, $h_{0:...}$ |
| $p_1$ | $c_1$ | $ID_1$ | $h_{1:0}$, $h_{1:1}$, $h_{1:2}$, $h_{1:3}$, $h_{1::...}$ |
| ... | ... | ... | ... |

Each light hub LH has four counters, one for each direction ($0 \leq d \leq 3$). When data has been fetched (or skipped) in the corresponding direction the counter is incremented, so that the next initPath can address data not already read. If the light hub LH targeted by the initPath responds with a transferPathSkip the counter is incremented without any other action.

$$Count_d \ (0 \leq d \leq 3) \ [INTEGER]$$

Each light hub LH also has a local counter containing the total count of all records (rows) stored in all Rd.

$$Count_{LOCAL} = \Sigma R_d.RowCount \ (0 \leq d \leq 3) \ [INTEGER]$$

Each light hub LH will always be in one and only one MODE, which will be explained below:

1. INACTIVE

All attempts to beacon adjacent LH's have failed. On each tmrBeacon overflow the DORMANT counter will increase in order to keep a record of how long the light hub has been INACTIVE.

2. ACTIVE

At least one light hub LH has answered the beacon. On each tmrBeacon overflow the ACTIVE counter will increase in order to keep a record of how long the light hub LH has been ACTIVE. This will also have an effect on determining how long time that shall pass between each tmrBeaconOverflow.

3. DISCOVERY

The System is in Discovery mode and will thus start to collect the ID's of its immediate neighbours.

4. MASTER

The light hub LH is designated being master mLH and will be the one that issues the Path function. Only one light hub LH can be master. Normally this happens when a main unit MU is attached to the light hub LH. It would also be possible for a light hub LH that senses that is farthest down to the left to issue this after a set amount of time. This would prepare the system for a later attachment of a main unit MU.

5. PATH

The light hub LH has been set into PATH mode since another light hub LH in the system has been assigned master light hub mLH.

The purpose of the discovery function is to establish an initial contact between light hub LH directly adjacent to each other. If one or more light hubs LH should run out of power their closest neighbor will have a record of its presence (backup function) The discovery function will be explained more detailed below with reference to Fig. 10.

Embodiment(s) for the system:

**Figure 1** shows multiple formwork panels P, erected adjacent to each other to build or wall - like structure, which later may be filled with concrete. As schematically depicted in figure 1, the formwork panels P comprise a hollow structure which is used as light channel for optical signal transmission. According to a preferred embodiment to light channels are provided in each formwork panel P, one first light channel, extending horizontally and one second light channel, extending vertically, so that the two light channels or hollow structures are perpendicular. The light channels are provided in each formwork panel P at the corresponding position, so that, if several panels are connected adjacent to each other, a non-stop light channel is generated, which extends over all the formwork panels P in one axis continuously and in a going through manner. As can be seen in figure 1, panel P1 is above panel P to, which in turn is left from panel P3 and so on and so forth. The floral light channel passage is depicted in figure 1 as dotted line, extending over the plurality of formwork panels P.

For embodying signal transmission via light, electronics in the form of so-called light hubs LH are used, which are introduced as small rectangular boxes into all or selected group of formwork panels P. The light hubs LH are exchangeable and replaceable, even after mounting of the formwork panels P.

Based on the example formwork construction, given in figure 1, **Figure 2** shows the respective signal transmission by means of the light hubs LH. As can be seen, all light hubs LH1- LH7 are connected and may exchange signals. It has to be pointed out, that the complete signal exchange between the formwork panels P and thus between the respective light hubs' LH is exclusively optical (solid line). One of the light hub's LH is determined as being a master light hub mLH. The master light hub mLH is determined from the set of light hubs LH at which a main unit MU is attached. Only when light hub LH may be master light hub and the others take the role as slave light hubs, in the example shown in figure 2: all light hubs LH except LH3. The main unit MU serves as connector or gateway to a secondary electronic or computer system 2C.

According to a preferred embodiment, the data exchange between the master light hub mLH and the main unit MU is light-based, too. However, in other embodiments, it is also possible to have another data transmission channels, like electrical (e.g., USB, WiFi, ZigBee etc.) or radio frequency-based data transmission. The data gathered on the main unit MU may further be transmitted to the secondary computer system 2C. The data exchange between the main unit MU and the secondary computer system 2C may be other wired or wireless data connection, and may in particular be implemented as radio frequency-based transmission. Preferably, both, the light hub to light hub data transmission as well as the data transmission between the master light hub mLH and the main unit MU is a light-based signal transmission, which in figure 2 is shown by a bidirectional arrow in solid lines, whereas the (possibly RF - based) signal transmission between the main unit MU and the secondary computer 2C may be of another type, which is shown in figure 2 by the arrow in dotted lines.

**Figure 3** shows a light hub LH in more detail. In the left upper corner of figure 3 an isometric and perspective representation of the light hub LH is shown. As can be seen in figure 3, the light hub LH consists of six surfaces, because the light hub has a box-like or rectangular structure. On the right side above in Fig. 3, the front side of the light hub LH is shown, which may comprise a light source set lss (e.g., a set of photo diodes) and a light receiver set lrs (e.g., photo resistors), in particular for the communication with the main unit MU. The combination of light source set lss and light receiver set lrs is also provided on all the other surfaces which are facing one of the light channels, in particular the left side surface, the right-side surface, the top surface and the bottom surface. These surfaces are engaging with the four light channels, two in the vertical dimension and to the horizontal dimension.

**Figure 4** shows the light hub LH in more detail. The whole unit is housed by a main body 101 preferably made of plastic or metal. A front panel 102 preferably made of plastic or metal carries one or more alignment pins 103 to steer the main unit MU into position when optionally attached to the light hub LH. The front panel 102 furthermore carries holes or translucent lenses 104 conveying light to a filter and a photocell that detects light for example using a photodiode or phototransistor 109 as well as a light emitter with a set wavelength (i.e., infrared) 110. The whole unit is held in place inside the hollow structure of the formwork panel by means of lock mechanisms 105. To enable fast maintenance refurbishment of soiled light hub's there are provided easily replaceable translucent plastic covers 106 in all four directions that protect the light transmitters and receivers behind them.

Proper seal towards the back wall is provided by compressible foam plastic 107. In a preferred embodiment the light hub unit is supplied with energy for operation from the sun shining on a multitude of photovoltaic cells assembled together to form a panel 108 facing outwards from the formwork panel P. At least four surfaces of the light hub LH are facing and engaging with the light channels or with the hollow structures for light transmission. Outbound communication in each of the four directions inside the hollow structure is carried out using light emitted by one or more of a plurality of light emitters, in a preferred embodiment red 111, green 112 and blue 113. Furthermore, inbound communication is detected by a photocell behind a Fresnel lens 114.

**Figure 5,** schematically depicts the light hub LH with its electronic modules according to a preferred embodiment. The light hub LH consists of a microcontroller μC which is used for controlling the signal transmission between the network of light hubs LH. The microcontroller μC may comprise an AD/DA converter for converting light signals into digital signals and vice versa and the processing unit, which is configured to execute a predefined protocol for signal transmission. The light hub LH further consists of the light receiver set lrs (e.g., photo transistors or photo diodes) and the light source set lss (e.g., a set of light emitting diodes/LED or laser). Further, the light hub LH may comprise a set of sensors *sens,* for acquiring a set of different physical parameters, comprising pressure sensors, temperature sensors, ultrasonic sensors, vibration sensors, and/or other sensor types. The sensors *sens* may be configured to protrude from the light hub LH into the hollow structure of the formwork panel P in order to gather the target physical parameters. For providing each of the light hubs' LH with energy, a battery may be used. Alternatively, or cumulatively, and preferably, power may be provided by means of a photovoltaic panel, attached at the outside of the formwork panel P, supplied with daylight for charging a capacitor or a super capacitor, being provided on the light hub LH as well. In case the light hub LH serves as master light hub mLH and the main unit MU is attached to the same, then power supply may be provided by means of the main unit MU. For example, the main unit MU may be configured to emit light by means of a light supply unit ls, provided on the main unit MU for charging a photovoltaic panel on the master light hub mLH (schematically shown in figure 6). As indicated in figure 5, a capacitor or a super capacitor may be provided for storing or harvesting locally harvested energy, e.g., by means of using photovoltaic cells, as described above.

As shown in **Figure 6,** a photovoltaic panel may be used to charge the main unit MU. As already mentioned above, the signal transmission between the master light hub mLH and the main unit MU is exclusively light-based, whereas the signal transmission between the main unit MU and the secondary computer 2C may use other channels for signal transmission (Wi-Fi, radio frequency, WLAN etc.).

**Figure 7** schematically shows the main unit MU in several perspectives. The whole main unit MU is cased in a main body 201 preferably made of plastic. A rear side 202 of the main body is designed so that it perfectly aligns the main unit MU against one and any of a light hub front panel 102. In order to align it, one or more alignment pins 203 are used. A photocell 209 is located behind a translucent lens 204 (not drawn) and a filter mainly allows for infrared light pass. Furthermore, a light emitter 210 with a set wavelength is located behind another translucent lens (not drawn). In a preferred embodiment the unit is firmly held in place by a lock mechanism 205 exerting clamping force against the outer perimeter of the hollow structure of the formwork panel. Electric connection to external power supply or serial data communication to a secondary computer is provided by a connector 206. Furthermore, a multiband antenna 207 enables digital data two-way radio communication to any compatible secondary system or network. Energy is harvested from the sun using a panel 208 containing a multitude of photovoltaic cells and fixed to the main body by means of an adjustable hinge. When attached to the front panel of a light hub LH, the main unit MU can provide power (energy) by activating an array containing a multitude of light emitters 211 directly towards the light hub's photo voltaic panel.

On the right lower corner of figure 7, the main unit MU is depicted in a three-dimensional representation, here it can be seen, that the photovoltaic panel 207 is tilted.

In another preferred embodiment, it is also possible to provide the main unit MU with a display for user interaction with system by means of the main unit directly on site, i.e., locally at the constructional site. Alternatively, the main unit may transfer the gathered data to an external secondary computer system 2C, as mentioned above.

**Figure 8** shows the data transmission between the main unit MU and the master light hub mLH. Next to the panel with photovoltaic cells on the front panel on the light hub LH, a LED, and photodiode is exposed through the glass or translucent plastic cover. This enables the light hub LH to also communicate with an optional external main unit MU placed in front of it on the outside. One or more pins ensure a perfect alignment. The main unit MU would employ an identical configuration of LED (sender) and photodiode on the surface area, attaching to the light hub LH. It would also provide power by shining light by the means of a high-power LED array on the panel with photovoltaic cells of the light hub LH. Data can then continuously be transferred between the light hub LH and the main unit MU while the connected light hub is supplied with external power. The main unit MU itself could either be supplied by the solar panel 81 a high-capacity rechargeable battery or a connection to an external power supply.

In Figure 8, left image, the light hub LH is drawn with a distance to the main unit MU in order to highlight what takes place between them when they are docked as in the right image. Firstly, power (energy) is transferred in the direction from the main unit MU to the light hub LH. A multitude of high-power light emitting diodes are shining light directly onto the solar panel of the light hub LH. This transfers energy from the main unit MU to the light hub LH.

Secondly, data is transferred in both directions using the light emitters and photo cells (109, 110, 209, 210).

**Figure 9** shows several examples, where the formwork panels P are positioned with different angles (e.g., 70°, 120°, 90°). In order to provide optical signal transmission through the light channels in the hollow structures of the respective formwork panels P, additional optoelectronic modules may be provided in the light channels in order to consider the angular construction of the panels P. The additional modules comprise reflectors, reflecting preconfigured wavelengths of light being transmitted. For example, a red-light reflector 91 may be used to enhance red light and to weaken other wavelengths. In a configuration phase, a specific type of reflector may be associated or assigned to the respective angle.

In this example, a red reflector 91 is fitted inside the structural member of two formwork parts comprising 90°-degree corner joints. A light hub LH in the panel to the right of the corner tries to communicate to the panel next to it. As a part of the protocol a test procedure is carried out whereby only individual colors of light are emitted, for example first red, then green and last blue. The light hub LH receiving this, will report back the power input of each individual light pulse. The test is carried out in both directions and the result is compared. If the conclusion is that the green and blue light pulses were both significantly less powerful than the red ones, this leads to the conclusion that a reflector mainly reflecting red light is placed between said two light hubs. This information is then made available to the rest of the network comprised of all other panels. Corners with other angles with other reflector coloration can be identified in an identical way.

Further, a spacer element may be positioned between two formwork panels P, shown in figure 9 on the right side. A red filter 91 is fitted inside the spacer block. A light hub LH in the panel P to the right of the spacer block tries to communicate to the panel next to it. As a part of the protocol a test procedure is carried out whereby only individual colors of light are emitted, for example first red, then green and last blue. The light hub LH receiving this, will report back the power input of each individual light pulse. The test is carried out in both directions and the result is compared. If the conclusion is that the green and blue light pulses were both significantly less powerful than the red this leads to the conclusion that a filter mainly reflecting red light is placed between the two. This information is then made available to the rest of the network comprised of all other panels. Parts of other spacer widths equipped with other filter coloration can be identified in an identical way.

Embodiment(s) for the Protocol:

**Figure 10** shows a flow chart of a discovery procedure or discovery function. Light hub LH1 wakes up as tmrBeacon overflows and sends a beacon in each direction. If the beacon is acknowledged a discovery is initialized. If successful, the light hub LH1 will store the ID's of directly adjacent light hub's n in its register along with the appropriate path.

**Figure 11** shows an interaction diagram for the discovery function. Light hub LH1 wakes up as tmrBeacon overflows and sends a beacon in each direction. If the beacon is acknowledged a discovery is initialized. If successful, the light hub LH1 will store the ID's of directly adjacent light hub's n in its register along with the appropriate path.

**Figure 12** depicts the path function with a flow chart and respective processing steps. Light hub LH 1 wakes up as a main unit MU is attached to it or if another light hub issues an initPath. It sends a beacon in direction d. If the beacon is acknowledged an initPath is initialized with the following parameters:
n = the pointer to the next unread entry in the adjacent LH

The Data counter keeps track of which entry is next to be read thus n will be set to $Count_d$ + 1 for this initPath try.
$ID_0$ = The ID of the Master LH that initially started the Path

If successful, the light hub LH1 will store the ID and path of as many light hub's n as possible incrementing n each time.

All units that have been requested a path will in turn be set in path mode and path data will be aggregated with subsequent transferPath calls until the adjacent light hub responds with a transferPathRefuse.

Infinite loops are avoided.

The first light hub LH that initialized the transferPath provides its own ID in the request ($ID_0$). Adjacent light hubs will respond with transferPathSkip if the requesters ID or $ID_0$ is found on the requested Rd:n or later.

**Figure 13** shows an interaction diagram relating to a further processing of the path function.

Step 1:

Formwork panels with light hubs are placed according to the earlier example. Although not a prerequisite in this example the DISCOVERY has been issued and has been fully propagated in effect creating redundant information on each panel. A main unit MU is attached to light hub ID: 02. This has activated the Path function with ID: 02 now being the master of all other panels. Since it now has its power supply secured via the main unit MU it takes an active role to aggregate data from all light hub's in the network. The master light hub mLH will issue an initPath in all directions one at a time, keeping track on the count in each individual direction. The count is incremented for each aggregated ID in that direction. Paths are read until the light hub at the other end responds with a transferPathRefuse. It will then try in the next direction. This will continue with intermittent breaks (sleep periods) in the case the adjacent light hub's all returns transferPathRefuse. At the next overflow of tmrBeacon it will try again to see of additional data is available on the next count in the respective direction.

The signal exchange is possible, even if a light hub (here: ID: 05) has run out of power and is not responding on beacons. This may be represented by:

| | | | | |
|---|---|---|---|---|
| LIGHTHUB ID: 07 | LIGHTHUB ID: 03 | LIGHTHUB ID: 06 | LIGHTHUB ID: 08 | LIGHTHUB ID: 10 |
| LIGHTH UB ID: 01 | LIGHTHUB ID: 02 | LIGHTHUB ID: 04 | *LIGHTHUB ID: 05 No Power* | LIGHTHUB ID: 09 |

Step 2:

Light hub ID: 02 is the master and thus initiates the Path functionality. The first direction to attempt is Down but no beaconAck is received in this direction. Next direction to try is left. A beaconAck is received and an initPath is directed to light hub ID: 01 to the left. The count was 0. This entry points back to the sender. light hub ID: 01 responds with a transferpathSkip and also flags for itself that all deeper requests in that direction (deeper to the right) from the light hub to the right (ID: 02) shall be responded with a transferpathSkip since they will pass through the transmission system that made the original request. Light hub ID: 02 increments count to 1 and issues a new initPath. Since a Discovery was already made this attempt is immediately successful. Light hub ID: 01 answered that it had content on count 1, namely ID: 07 in the direction Up (▲). Light hub ID: 02 immediately acknowledges the received data and tries again on count 2. Since light hub ID: 01 was just set into path mode it has not yet had time to aggregate more data. There is no information on count 2. It issues a refusePath. This closes the communication with light hub ID: 02 for now and will force light hub ID: 02 to try in the next direction. The table for light hub ID: 02 shows the content of the direction registers as well as the MODE.

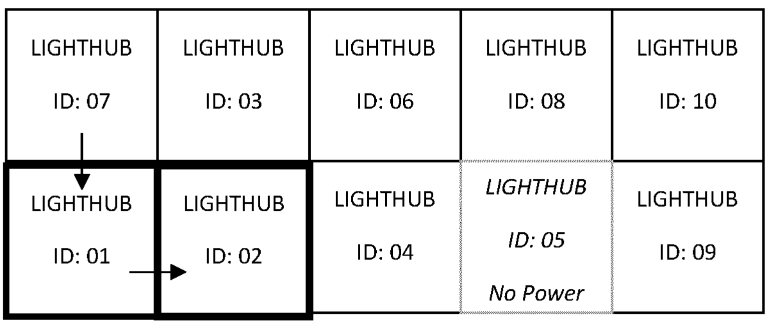


Step 3:

Light hub ID: 02 continues to initiate the Path functionality. Now the direction is to the right. A beaconAck is received and an initPath is directed to light hub ID: 04 to the right. The count is 0. This entry points back to the sender. light hub ID: 04 responds with a transferpathSkip and also flags for itself that all deeper requests in that direction (deeper to the left) from the light hub to the left (ID: 02) shall be responded with a transferpathSkip since they will pass through the transmission system that made the original request. Light hub ID: 02 increments count to 1 and issues a new initPath. Since a Discovery was already made this attempt is immediately successful. light hub ID: 04 answered that it had content on count 1, namely ID: 05 in the direction Right (►). Light hub ID: 02 immediately acknowledges the received data and tries again on count 2. light hub ID: 04 answered that it had content on count 2, namely ID: 06 in the direction Up (▲). Light hub ID: 02 immediately acknowledges the received data and tries again on count 3. Since light hub ID: 04 was just set into path mode it has not yet had time to aggregate more data. There is no information on count 3. It issues a refusePath. This closes the communication with light hub ID: 02 for now and will force light hub ID: 02 to try in the next direction. The table for light hub ID: 02 shows the content of the direction registers after the transactions exemplified above.

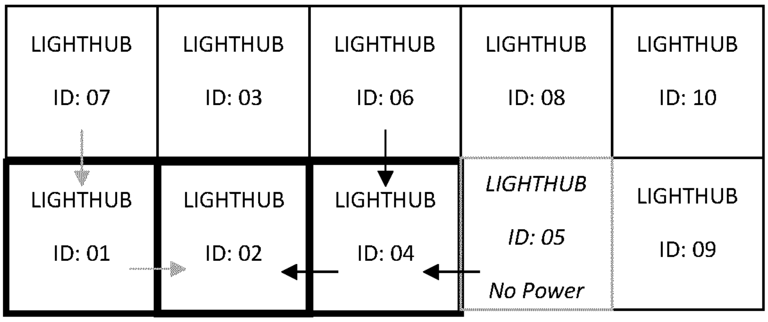


Step 4:

Light hub ID: 02 continues to initiate the Path functionality. Now the direction is to up. The process described earlier is repeated and light hub's ID: 07 as well as ID: 06 are added to the register for the Up direction. Since the Path functionality is now trickling out in the System light hub ID:07, ID: 04 and now also ID: 03 is now also aggregating data on their own. If the ID of the light hub originally issuing the Path functionality (ID0) is addressed (count) or if the address (count) refers to the sender the responding light hub will always issue a transferpathSkip. This prevents an overload of redundant data. The table for light hub ID: 02 shows the content of the direction registers after the communication in the Up direction described above.

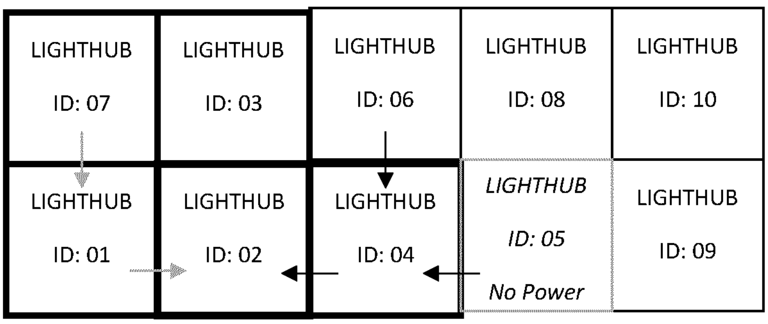


Step 5:

The Path functionality originally activated by light hub ID: 02 trickles out in the network. This has the effect that all panels start to aggregate Path data. In the meantime, light hub ID: 02 resumes to a passive state for a short while. If the ID of the light hub originally issuing the Path functionality (ID0) is addressed (count) or if the address (count) refers to the sender the responding light hub will always issue a transferpathSkip. This prevents an overload of redundant data. By now light hub ID: 07 has collected data from the full row of light hub's all the way to light hub ID: 06 but not further. Light hub ID: 01 issues the Path functionality in the direction up and receives new data that was not available earlier - namely the ID's and paths for all panels up until ID: 08.

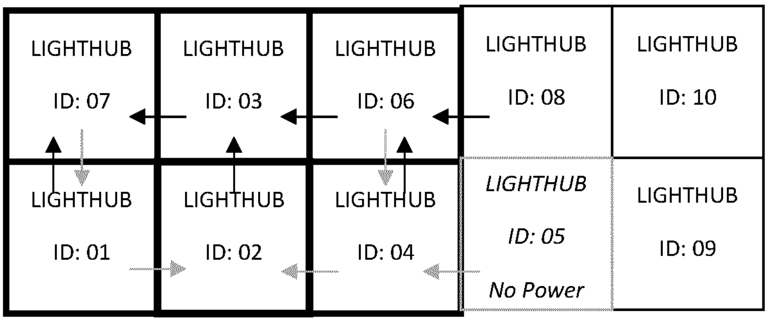


Step 6:

Light hub ID: 02 now again issues the Path functionality in each direction and receives the new data that was not available earlier - namely the ID's and paths for all panels up until ID: 08 with the corresponding paths to reach light hub ID: 03 and ID: 01 respectively. At the same time the Path function trickles farther out in the System finally reaching the most distant light hubs.

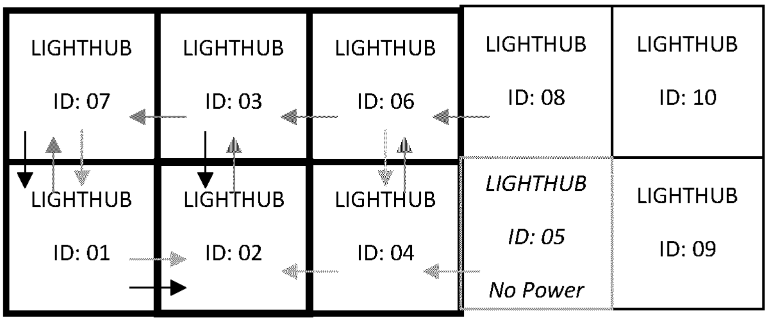


Step 7:

Light hub ID: 02 will continue to probe the adjacent light hub's for any new data but the System is now fully determined and all issued initPath's will be refused. Note that even though light hub ID: 05 only achieved to transfer its ID on the initial Discovery it is still successfully mapped in ID: 02's registers.

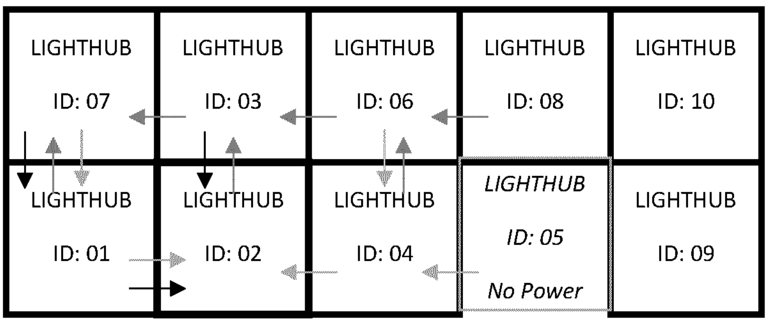


The registry entries look like:

ID: 02 MODE: MASTER

R0 DOWN

| pos | count | ID | path |
|---|---|---|---|
| | | | |
| | | | |
| | | | |
| | | | |
| | | | |
| | | | |
| | | | |
| | | | |
| | | | |
| | | | |

R1 LEFT

| pos | count | ID | path |
|---|---|---|---|
| 0 | 0 | 01 | ◄ |
| 1 | 3 | 07 | ◄▲ |
| 2 | 8 | 03 | ◄▲► |
| 3 | 9 | 06 | ◄▲►► |
| 4 | 10 | 04 | ◄▲►►▼ |
| 5 | 11 | 08 | ◄▲►►► |
| 6 | 14 | 05 | ◄▲►►►►▼ |
| 7 | 15 | 10 | ◄▲►►►►► |
| 8 | 16 | 09 | ◄▲►►►►►▼ |
| | | | |

R2 RIGHT

| pos | count | ID | path |
|---|---|---|---|
| 0 | 2 | 04 | ► |
| 1 | 4 | 05 | ►► |
| 2 | 5 | 06 | ►▲ |
| 1 | 17 | 03 | ►▲◄ |
| 2 | 18 | 08 | ►▲► |
| 3 | 19 | 07 | ►▲◄◄ |
| 4 | 20 | 01 | ►▲◄◄▼ |
| 5 | 21 | 05 | ►▲►▼ |
| 6 | 22 | 10 | ►▲►► |
| 7 | 23 | 09 | ►▲►►▼ |
| 8 | 24 | 05 | ►▲►►▼◄ |

R3 UP

| pos | count | ID | path |
|---|---|---|---|
| 0 | 1 | 03 | ▲ |
| 1 | 6 | 06 | ▲► |
| 2 | 7 | 07 | ▲◄ |
| 3 | 12 | 04 | ▲►▼ |
| 4 | 13 | 08 | ▲►► |
| 1 | 3 | 04 | ▲►▼ |
| 2 | 4 | 08 | ▲►► |
| 3 | 6 | 05 | ▲►▼► |
| 4 | 7 | 10 | ▲►►► |
| 5 | 8 | 09 | ▲►►►▼ |
| 6 | 9 | 05 | ▲►►►▼◄ |

Send function:

The purpose of the Send function is to transfer data of any kind between light hub's using the Path data stored. The Send function tries to send the data using the shortest path possible. Since the Payload can be any arbitrary type of data advanced messaging would be possible. A part of the Payload could for example be a message header containing the Sender ID and a flag if an acknowledgement of received message is expected. When the receiver gets the message, it will return a new message with a Message received flag in the corresponding header.

**Figure 14** represent schematically the send function. light hub 1 has a message to send to a light hub with ID. It looks through all register Rd to find the shortest path to ID. I then tries to initSend in the corresponding direction. The adjacent light hub will forward the message if the ID is present in one of its Rd. If an adjacent light hub refuse to initSend alternate paths are tried if possible.

**Figure 15** is an interaction diagram for the send function, which is self-explanatory.

**Figure 16** further shows details with respect to the send function. Light hub ID: 02 need to Send data to light hub ID: 09. The path to light hub ID: 09 is found in all registers d = 1 to 3, that is there is a path to ID: 09 in all directions except Down. The shortest path is found in R2 with a total of five jumps (► ▲ ► ► ▼). Light hub ID: 02 will initSend in direction 2 (Right) to ID: 04. The same algorithm is applied jump by jump until the message reaches its destination.

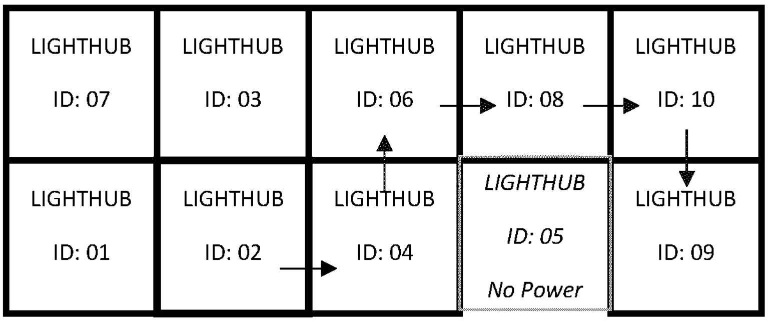


**Figure 17** is a flow chart for a method for operating a master light hub mLH according to a preferred embodiment. After having started the method, in step SM1 panel data are provided. Panel data do comprise the unique identifier ID. In step SM 2, the provided panel data are converted to a sequence of light pulses according to the preconfigured protocol, mentioned in detail above. In step SM3, the sequence of light pulses, directed to the slave light hubs, which are integrated in directly or indirectly adjacent formwork panels PR are emitted. In step SM4, a sequence of response light pulses from the addressed slave light hubs and received response to the emitted sequence of light pulses. In step SM5, all received response light pulses are aggregated and stored locally in a registry. In step SM5, the result is generated, based on the aggregated and stored data. The result includes the aggregated received response light pulses from all addressed slave light hubs. In an optional step SM7 (represented in Fig. 17 by dotted lines), the result may be transmitted to an external unit, in particular to the main unit MU by using various data transmission channels, for example a light-based channel, or a digital channel. In any case, the result is provided on the main unit MU in a digital format. Subsequently, the result may be further processed and/or may be transmitted to a secondary computer system 2C.

Generally, the result, which is being generated, may be provided on an output interface, e.g., on a display means or may be provided as an acoustic output. The result encodes all the aggregated data on the master light hub mLH. In particular, the result encodes:

- the identifiers of the panels P, which are present in the panel construction;
- the position of the respective identified panels; in particular the position information may be provided in a graphical form, as mentioned above in the detailed description, for example by using rectangles for representing the respective formwork panels P;
- sensor data of the specific panels, detected locally inside the formwork panel;
- timing information, when the panel has been erected and/or how long it is already used; comprising a measure on how much time the individual panel was stored compared to how much time it has been in use. In a preferred embodiment, this is used to automatically calculate the utilization level and perhaps to determine when it is time to refurbish the panel and/or
- meta information, in particular alert messages for the respective panels, e.g., indicating the requirement of replacement or a low power supply.

As already mentioned above, the signal exchange between the main unit MU and the light hubs LH is bidirectional, so that also instructional data may be sent to a specific formwork panel P. The instructional data may for example trigger the light hub LH on the respective formwork panel P to execute a specific function or to change a state [dormant/awake] or role.

**Figure 18** is a flow chart for a method for operating a slave light hub according to a preferred embodiment. In Step SS 1, the beacon signal is received from an adjacent light hub LH. In response to the reception of the beacon signal, in step SS2, the slave light hub is transferred from a dormant state in an awake state. The step SS3, the receipt of the beacon signal is acknowledged. A transfer function may be applied for transferring the slave light hub from the awake state in the dormant state in step SS4. Preferably, the transfer function considers the actual power supply of the slave light hub. The lower the power supply is, the earlier the transfer in the dormant state is executed for saving power and vice versa. In step SS5 a discovery signal may be received from an adjacent light hub LH. In step SS6, the received discovery signal is propagated to an adjacent light hub LH in the same direction until a last light hub LH in said direction is reached. Further, a counter is incremented locally for each aggregated unique identifier.

The secondary computer system 2C may operate in a networked environment which defines physical connections to one or more remote computers. The remote computer may be another personal computer, a server, a router, a network PC, a peer device or other common network node, and may include many or all of the elements described above. The physical connections include a local area network (LAN) and a wide area network (WAN), an intranet and the Internet.

Wherever not already described explicitly, individual embodiments, or their individual aspects and features, described in relation to the drawings can be combined or exchanged with one another, whenever such a combination or exchange is meaningful and falling inside the scope of this invention, which is only defined by the appended claims. Advantages which are described with respect to a particular embodiment of present invention or with respect to a particular figure are, wherever applicable, also advantages of other embodiments of the present invention.

## Claims

**1.** A formwork panel (P) used for building panel constructions comprising a plurality of formwork panels, the formwork panel (P) comprising:

- A hollow structure, which is used for forming light channels within the formwork panel (P), extending in at least two axes, wherein the at least two axes are configured to have an intersecting area;
- A light hub (LH), positioned at the intersecting area inside the formwork panel (P), such as the light hub (LH) and in particular its surfaces are facing the light channels, and wherein the light hub (LH) comprises at least a light source set (Iss) and a light receiver set (Irs) and a microcontroller ($\mu$C), coupled to the light source set (Iss) and the light receiver set (Irs) for controlling operation of the same;
- wherein each formwork panel (P) provides panel data, comprising a unique identifier (ID);
- wherein the microcontroller ($\mu$C) is configured to control operation of the light hub (LH) and in particular the light-based signal exchange to and from at least one other light hub (LH) in at least one other formwork panel (P), placed adjacent to the formwork panel (P) in the panel construction according to at least one predefined protocol;
- wherein the protocol defines how to convert the panel data and in particular different types of panel data in light pulses and vice versa.

**2.** The formwork panel according to claim 1, wherein the light channels, in particular the hollow structures are extending over the complete width and height of the formwork panel (P).

**3.** The formwork panel according to any of the preceding claims, wherein the light hub (LH) is implemented as slave light hub or as master light hub (mLH), wherein the slave light hub is configured to communicate exclusively via light pulses with other light hubs and wherein the master light hub (mLH) is configured to aggregate all data from all slave light hubs and to communicate with a main unit (MU), being non permanently attached to the master light hub (mLH).

**4.** A method for operating the master light hub (mLH) of the formwork panel according to claim 3 with a plurality of formwork panels (P), wherein the master light hub (mLH) is configured for signal exchange with a set of slave light hubs in directly or indirectly adjacent formwork panels (P), comprising the following steps, which are executed on the master light hub (mLH):

- Providing (SM1) panel data with a unique identifier (ID) of the formwork panel (P) locally at the formwork panel (P);
- Converting (SM2) the provided panel data to a sequence of light pulses according to a predefined protocol and
- Emitting (SM3) the sequence of light pulses to the slave light hubs;
- Receiving (SM4) a sequence of response light pulses from the slave light hubs in response to the emitted sequence of light pulses; wherein emitting (SM3) and receiving (SM4) comprises the respective panel data;
- Aggregating (SM5) all received response light pulses and
- Generating a result (SM6), encoding the aggregated received response light pulses.

**5.** The method according to the directly preceding method claim, wherein the method further comprises:

- By the master light hub (mLH): Transmitting (SM7) the generated result to an external unit, in particular to a main unit (MU), being non-permanently attached to a master formwork panel (P), carrying the main unit (MU).

6. The method according to any of the preceding method claims, wherein the protocol is based on a challenge response protocol, wherein generated light pulses serve as challenge light pulses and are sent by the light source set (lss) of the light hub (LH) to slave light hubs in other formwork panels (P), which are acknowledging receipt of the same by sending response light pulses back.

7. The method according to any of the preceding method claims, wherein emitting (SM3) is done in four directions, in particular one at a time, and wherein the sequence of light pulses is specific for four directions and comprises a direction identifier.

8. The method according to any of the preceding method claims, wherein the method to be executed on the master light hub (mLH) comprises:

- Initiating a beacon procedure for performing a handshake procedure for initiating communication with adjacent light hubs and for preparing the master light hub and the respective slave light hub(s) for communication;
- Initiating a discovery procedure for identifying all directly adjacent slave light hubs and determining their position in each of the four directions as first intermediate result;
- Initiating a path function for identifying all slave light hubs, in particular, by propagating the path function in the network of light hubs as second intermediate result;
- Aggregating all intermediate results of the discovery procedure in all four directions and generating a result, which is stored as result data structure in digital form locally in a memory.

9. The method according to the directly preceding method claim, wherein the beacon procedure comprises the steps of:

- Sending a beacon signal in each of the four directions to each adjacent light hub with a unique identifier;
- Receiving a response to the sent beacon signal;
- Storing the unique identifier of the light hub from which an acknowledge signal has been received.

10. The method according to any of the preceding method claims, wherein the method comprises:

- Adjusting frequency and/or power of the emitted sequence of light pulses in the step of emitting (SM3), in particular of a beacon signal, to optimize both of a signal to noise ratio and an energy consumption.

11. The method according to claims 8 or 9 or 10 wherein executing the discovery procedure by the master light hub (mLH) comprises executing the path function, comprising the following steps to be executed on the master light hub (mLH):

- sending a unique identifier to the adjacent slave light hubs in each of the four directions;
- in response: receiving the unique identifiers of the adjacent slave light hubs as response message;
- storing the response message with an indication of the direction.

12. A method for operating the slave light hub of a formwork panel according to claim 3 with a plurality of formwork panels (P), wherein the slave light hub is configured for signal exchange between a set of light hubs in directly adjacent of formwork panels, comprising the following steps, which are executed on the slave light hub:

- Receiving (SS1) a beacon signal from an adjacent light hub;
- In response to the receipt of the beacon signal: Transferring (SS2) the slave light hub from a dormant state in an awake state;
- Acknowledging (SS3) the receipt of the beacon signal;
- Transferring (SS4) the slave light hub from the awake state in the dormant state by applying a transfer function;
- Receiving (SS5) a discovery signal from an adjacent light hub;
- Propagating (SS6) the received discovery signal to an adjacent light hub in the same direction until a last light hub in said direction is reached and incrementing a counter locally for each aggregated unique identifier.

13. The method according to the directly preceding claim, wherein the transfer function considers actual power resources of the light hub.

14. A system for light-based signal exchange between a plurality of formwork panels (P) used in building constructions to build a panel construction, with:

- A plurality of formwork panels (P) according to claim 1, which are to be erected to build a wall-like structure;
- At least one main unit (MU) for the plurality of formwork panels, which is configured to be temporarily attached to a master formwork panel, wherein one of the plurality of formwork panels (P) is configured as master formwork panel and its light hub is configured as master light hub (mLH), which serves for signal exchange and as an interface to the main unit (MU) and which is configured to be operated with a method according to any of the method of claims 4 to 11.

**15.** The system according to the directly preceding claim, wherein the main unit (MU) is a and/or is at least temporarily coupled to a secondary electronic system (2C) via a wireless protocol for data exchange.

**16.** The system according to any of the preceding system claims, wherein the interface between the master light hub (mLH) and the main unit (MU) is bidirectional and configured to send and/or receive data.

**17.** The system according to any of the preceding system claims, wherein the master light hub (mLH) communicates with the main unit (MU) and/or with the slave light hubs via light pulses.

**18.** The system according to any of the preceding system claims, wherein the master light hub (mLH) is supplied with power by the main unit (MU) or by an autonomous power supply system and/or is equipped with a battery and/or wherein the slave light hubs is supplied with power by an autonomous power supply system and/or is equipped with a battery.

**19.** The system according to any of the preceding system claims, wherein at least one of the formwork panels (P) has a corner structure with a particular angle and wherein the system further comprises reflectors and/or light filters, attached in the light channels of the formwork panel (P) in order to provide light exchange also in angle structures.

**20.** The system according to any of the preceding system claims, wherein the signal strength of the transmitted light signals, exchanged between the light hubs is determined and processed and/or wherein filters are placed within the light channel, for activating remedy measures in case at least one of the formwork panels (P) is not equipped with a light hub (LH) or one slave light hub has not sufficient power.

**Patentansprüche**

**1.** Schalungspaneel (P), das für Baupaneelkonstruktionen verwendet wird und eine Vielzahl von Schalungspaneelen umfasst, wobei das Schalungspaneel (P) Folgendes umfasst:

- Eine Hohlstruktur, die zur Bildung von Lichtkanälen innerhalb des Schalungspaneels (P) verwendet wird, die sich in mindestens zwei Achsen erstrecken, wobei die mindestens zwei Achsen so konfiguriert sind, dass sie einen Schnittbereich aufweisen;
- Ein Lichtknoten (LH), der an dem Kreuzungsbereich innerhalb des Schalungspaneels (P) positioniert ist, so dass der Lichtknoten (LH) und insbesondere dessen Oberflächen den Lichtkanälen zugewandt sind, und wobei der Lichtknoten (LH) mindestens einen Lichtquellensatz (Iss) und einen Lichtempfängersatz (Irs) und einen Mikrocontroller (μC) umfasst, der mit dem Lichtquellensatz (Iss) und dem Lichtempfängersatz (Irs) gekoppelt ist, um deren Betrieb zu steuern;
- wobei jedes Schalungspaneel (P) Paneeldaten liefert, die eine eindeutige Kennung (ID) umfassen;
- wobei der Mikrocontroller (μC) so konfiguriert ist, dass er den Betrieb des Lichtknotens (LH) und insbesondere den lichtbasierten Signalaustausch zu und von mindestens einem anderen Lichtknoten (LH) in mindestens einem anderen Schalungspaneel (P) steuert, das in der Paneelkonstruktion gemäß mindestens einem vordefinierten Protokoll neben dem Schalungspaneel (P) angeordnet ist;
- wobei das Protokoll festlegt, wie die Paneeldaten und insbesondere verschiedene Arten von Paneeldaten in Lichtimpulse und umgekehrt zu konvertieren sind .

**2.** Schalungspaneel nach Anspruch 1, wobei sich die Lichtkanäle, insbesondere die Hohlkörper, über die gesamte Breite und Höhe des Schalungspaneels (P) erstrecken.

**3.** Schalungspaneel nach einem der vorhergehenden Ansprüche, wobei der Lichtknoten (LH) als Slave-Lichtknoten oder als Master-Lichtknoten (mLH) ausgeführt ist, wobei der Slave-Lichtknoten so konfiguriert ist, dass er ausschließlich über Lichtimpulse mit anderen Lichtknoten kommuniziert, und wobei der Master-Lichtknoten (mLH) so konfiguriert ist, dass er alle Daten von allen Slave-Lichtknoten aggregiert und mit einer Haupteinheit (MU) kommuniziert, die nicht dauerhaft mit dem Master-Lichtknoten (mLH) verbunden ist.

4. Verfahren zum Betrieb des Master-Lichtknotens (mLH) des Schalungspaneels nach Anspruch 3 mit einer Mehrzahl von Schalungspaneelen (P), wobei der Master-Lichtknoten (mLH) zum Signalaustausch mit einem Satz von Slave-Lichtknoten in direkt oder indirekt benachbarten Schalungspaneelen (P) konfiguriert ist, umfassend die folgenden Schritte, die auf dem Master-Lichtknoten (mLH) ausgeführt werden:

- Bereitstellung von (SM1) Paneeldaten mit einer eindeutigen Kennung (ID) des Schalungspaneels (P) lokal am Schalungspaneel (P);
- Umwandlung (SM2) der bereitgestellten Paneeldaten in eine Folge von Lichtimpulsen gemäß einem vordefinierten Protokoll und
- Senden (SM3) der Folge von Lichtimpulsen an die Slave-Lichtknoten;
- Empfangen (SM4) einer Sequenz von Antwort-Lichtimpulsen von den Slave-Lichtknoten als Reaktion auf die gesendete Sequenz von Lichtimpulsen; wobei das Senden (SM3) und das Empfangen (SM4) die jeweiligen Felddaten umfassen;
- Aggregieren (SM5) aller empfangenen Antwortlichtimpulse und
- Generierung eines Ergebnisses (SM6), das die aggregierten empfangenen Antwortlichtimpulse kodiert.

5. Verfahren gemäß dem unmittelbar vorangehenden Verfahrensanspruch, wobei das Verfahren weiterhin umfasst:

- Durch den Master-Lichtknoten (MLH): Übermittlung (SM7) des erzeugten Ergebnisses an eine externe Einheit, insbesondere an eine Haupteinheit (MU), die nicht dauerhaft an einem Hauptschalungspaneel (P) befestigt ist, die die Haupteinheit (MU) trägt.

6. Verfahren nach einem der vorhergehenden Verfahrensansprüche, wobei das Protokoll auf einem Challenge-Response-Protokoll basiert, bei dem erzeugte Lichtimpulse als Challenge-Lichtimpulse dienen und vom Lichtquellensatz (Iss) des Lichtknotens (LH) an Slave-Lichtknoten in anderen Schalungspaneelen (P) gesendet werden, die den Empfang derselben durch das Zurücksenden von Response-Lichtimpulsen bestätigen.

7. Verfahren nach einem der vorangehenden Verfahrensansprüche, wobei das Emittieren (SM3) in vier Richtungen erfolgt, insbesondere in jeweils eine Richtung, und wobei die Folge von Lichtimpulsen für vier Richtungen spezifisch ist und eine Richtungskennung umfasst.

8. Verfahren nach einem der vorhergehenden Verfahrensansprüche, wobei das auf dem Master-Lichtknoten (MLH) auszuführende Verfahren umfasst:

- Einleiten einer Bakenprozedur zur Durchführung einer Handshake-Prozedur zur Einleitung der Kommunikation mit benachbarten Lichtknoten und zur Vorbereitung des Master-Lichtknotens und dem/den jeweiligen Slave-Lichtknoten für die Kommunikation;
- Initiierung eines Erkennungsverfahrens zur Identifizierung aller direkt benachbarten Slave-Lichtknotens und Bestimmung ihrer Position in jeder der vier Richtungen als erstes Zwischenergebnis;
- Initiierung einer Pfadfunktion zur Identifizierung aller Slave-Lichtknoten, insbesondere durch Weitergabe der Pfadfunktion im Netz der Lichtknoten als zweites Zwischenergebnis;
- Aggregieren aller Zwischenergebnisse des Suchverfahrens in alle vier Richtungen und Erzeugen eines Ergebnisses, das als Ergebnisdatenstruktur in digitaler Form lokal in einem Speicher abgelegt wird.

9. Verfahren gemäß dem unmittelbar vorangehenden Verfahrensanspruch, wobei das Bakenverfahren die folgenden Schritte umfasst:

- Senden eines Bakensignals in jede der vier Richtungen an jeden benachbarten Lichtknoten mit einer eindeutigen Kennung;
- Empfangen einer Antwort auf das gesendete Bakensignal;
- Speicherung der eindeutigen Kennung des Lichtknotens, von dem ein Bestätigungssignal empfangen wurde.

10. Verfahren nach einem der vorangehenden Verfahrensansprüche, wobei das Verfahren umfasst:

- Einstellen der Frequenz und/oder der Leistung der gesendeten Folge von Lichtimpulsen im Schritt des Sendens (SM3), insbesondere eines Bakensignals, zur Optimierung sowohl des Signal-Rausch-Verhältnisses als auch des Energieverbrauchs.

**11.** Verfahren nach Anspruch 8 oder 9 oder 10, wobei das Ausführen der Erkennungsprozedur durch den Master-Lichtknoten (mLH) das Ausführen der Pfadfunktion umfasst, die die folgenden Schritte umfasst, die auf dem Master-Lichtknoten (mLH) auszuführen sind:

- Senden einer eindeutigen Kennung an die benachbarten Slave-Lichtknoten in jeder der vier Richtungen;
- als Antwort: Empfang der eindeutigen Kennungen der benachbarten Slave-Lichtknoten als Antwortnachricht;
- Speicherung der Antwortnachricht mit Angabe der Richtung.

**12.** Verfahren zum Betreiben des Slave-Lichtknotens eines Schalungspaneels nach Anspruch 3 mit mehreren Schalungspaneelen (P), wobei der Slave-Lichtknoten zum Signalaustausch zwischen einem Satz von Lichtknoten in unmittelbar benachbarten Schalungspaneelen ausgebildet ist, umfassend die folgenden Schritte, die auf dem Slave-Lichtknoten ausgeführt werden:

- Empfangen (SS1) eines Bakensignals von einem benachbarten Lichtknoten;
- Als Reaktion auf den Empfang des Bakensignals: Überführung (SS2) des Slave-Lichtknotens aus einem Ruhezustand in einen Wachzustand;
- Quittierung (SS3) des Empfangs des Bakensignals;
- Überführung (SS4) des Slave-Lichtknotens vom Wachzustand in den Ruhezustand durch Anwendung einer Übertragungsfunktion;
- Empfang (SS5) eines Erkennungssignals von einem benachbarten Lichtknoten;
- Weiterleitung (SS6) des empfangenen Erkennungssignals an einen benachbarten Lichtknoten in derselben Richtung, bis ein letzter Lichtknoten in dieser Richtung erreicht ist, und lokale Inkrementierung eines Zählers für jede aggregierte eindeutige Kennung.

**13.** Verfahren nach dem unmittelbar vorangehenden Anspruch, wobei die Übertragungsfunktion die tatsächlichen Leistungsressourcen der Lichtnabe berücksichtigt.

**14.** System zum lichtbasierten Signalaustausch zwischen einer Vielzahl von Schalungspaneelen (P), die in Baukonstruktionen verwendet werden, um eine Paneelkonstruktion zu errichten, mit:

- Mehrere Schalungspaneelen (P) nach Anspruch 1, die zur Errichtung einer wandartigen Struktur zu errichten sind;
- Mindestens eine Haupteinheit (MU) für die Mehrzahl von Schalungspaneelen, die dazu ausgebildet ist, temporär an einem Master-Schalungspaneel befestigt zu werden, wobei eine der Mehrzahl von Schalungspaneelen (P) als Master-Schalungspaneel und deren Lichtknoten als Master-Lichtknoten (MLH) ausgebildet ist, der zum Signalaustausch und als Schnittstelle zur Haupteinheit (MU) dient und der dazu ausgebildet ist, mit einem Verfahren nach einem der Verfahren der Ansprüche 4 bis 11 betrieben zu werden.

**15.** System nach dem unmittelbar vorhergehenden Anspruch, wobei die Haupteinheit (MU) ein und/oder zumindest zeitweise mit einem sekundären elektronischen System (2C) über ein drahtloses Protokoll zum Datenaustausch gekoppelt ist.

**16.** System nach einem der vorhergehenden Systemansprüche, wobei die Schnittstelle zwischen dem Master Lichtknoten (MLH) und der Haupteinheit (MU) bidirektional ist und zum Senden und/oder Empfangen von Daten konfiguriert ist.

**17.** System nach einem der vorhergehenden Systemansprüche, wobei der Master-Lichtknoten (MLH) mit der Haupteinheit (MU) und/oder mit den Slave-Lichtknoten über Lichtimpulse kommuniziert.

**18.** System nach einem der vorhergehenden Systemansprüche, wobei der Master-Lichtknoten (MLH) durch die Haupteinheit (MU) oder durch ein autonomes Stromversorgungssystem mit Strom versorgt wird und/oder mit einer Batterie ausgestattet ist und/oder wobei die Slave-Lichtknotens durch ein autonomes Stromversorgungssystem mit Strom versorgt werden und/oder mit einer Batterie ausgestattet sind.

**19.** System nach einem der vorhergehenden Systemansprüche, wobei mindestens eine der Schalungspaneele (P) eine Eckstruktur mit einem bestimmten Winkel aufweist und wobei das System ferner Reflektoren und/oder Lichtfilter umfasst, die in den Lichtkanälen des Schalungspaneels (P) angebracht sind, um einen Lichtaustausch auch in Winkelstrukturen zu ermöglichen.

**20.** System nach einem der vorhergehenden Systemansprüche, bei dem die Signalstärke der zwischen den Lichtknoten ausgetauschten, übertragenen Lichtsignale ermittelt und verarbeitet wird und/oder bei dem Filter im Lichtkanal angeordnet sind, um Abhilfemaßnahmen zu aktivieren, falls mindestens eine der Schalungspaneele (P) nicht mit einem Lichtknoten (LH) ausgestattet ist oder ein Slave-Lichtknoten nicht über ausreichende Leistung verfügt.

## Revendications

**1.** Panneau de coffrage (P) utilisé pour la construction de panneaux comprenant plusieurs panneaux de coffrage, le panneau de coffrage (P) comprenant:

- Une structure creuse, utilisée pour former des canaux lumineux à l'intérieur du panneau de coffrage (P), s'étendant selon au moins deux axes, dans laquelle les deux axes au moins sont configurés pour avoir zone d'intersection ;
- Un concentrateur de lumière (LH), positionné dans la zone d'intersection à l'intérieur du panneau de coffrage (P), tel que le concentrateur de lumière (LH) et en particulier ses surfaces font face aux canaux de lumière, et dans lequel le concentrateur de lumière (LH) comprend au moins un ensemble de sources de lumière (Iss) et un ensemble de récepteurs de lumière (Irs) et un microcontrôleur ($\mu$C), couplé à l'ensemble de sources de lumière (Iss) et à l'ensemble de récepteurs de lumière (Irs) pour commander le fonctionnement de celui-ci ;
- où chaque panneau de coffrage (P) fournit des données sur le panneau, comprenant un identifiant unique (ID) ;
- dans lequel le microcontrôleur ($\mu$C) est configuré pour commander le fonctionnement du concentrateur de lumière (LH) et en particulier l'échange de signaux basés sur la lumière vers et depuis au moins un autre concentrateur de lumière (LH) dans au moins un autre panneau de coffrage (P), placé à côté du panneau de coffrage (P) dans la construction de panneaux, selon au moins un protocole prédéfini ;
- dans lequel le protocole définit la manière de convertir les données du panel et en particulier les différents types de données du panel en impulsions lumineuses et vice versa .

**2.** Le panneau de coffrage selon la revendication 1, dans lequel les canaux lumineux, en particulier les structures creuses, s'étendent sur toute la largeur et la hauteur du panneau de coffrage (P).

**3.** Le panneau de coffrage selon l'une des revendications précédentes, dans lequel le concentrateur de lumière (LH) est mis en œuvre comme concentrateur de lumière esclave ou comme concentrateur de lumière maître (mLH), dans lequel le concentrateur de lumière esclave est configuré pour communiquer exclusivement par des impulsions lumineuses avec d'autres concentrateurs de lumière et dans lequel le concentrateur de lumière maître (mLH) est configuré pour agréger toutes les données de tous les concentrateurs de lumière esclaves et pour communiquer avec une unité principale (MU), étant fixée de manière non permanente au concentrateur de lumière maître (mLH).

**4.** Méthode pour faire fonctionner le concentrateur de lumière maître (mLH) du panneau de coffrage selon la revendication 3 avec une pluralité de panneaux de coffrage (P), dans laquelle le concentrateur de lumière maître (mLH) est configuré pour l'échange de signaux avec un ensemble de concentrateurs de lumière esclaves dans des panneaux de coffrage (P) directement ou indirectement adjacents, comprenant les étapes suivantes, qui sont exécutées sur le concentrateur de lumière maître (mLH) :

- Fournir (SM1) les données du panneau avec un identifiant unique (ID) du panneau de coffrage (P) localement sur le panneau de coffrage (P) ;
- Convertir (SM2) les données fournies par le panneau en une séquence d'impulsions lumineuses selon un protocole prédéfini et
- Émettre (SM3) la séquence d'impulsions lumineuses vers les concentrateurs de lumière esclaves ;
- Recevoir (SM4) une séquence d'impulsions lumineuses de réponse des concentrateurs de lumière esclaves en réponse à la séquence d'impulsions lumineuses émises ; l'émission (SM3) et la réception (SM4) comprenant les données respectives du panneau ;
- Agrégation (SM5) de toutes les impulsions lumineuses de réponse reçues et
- Génération d'un résultat (SM6), codant les impulsions lumineuses de réponse reçues agrégées.

**5.** La méthode selon la revendication de méthode directement précédente, dans laquelle la méthode comprend en outre :

- Par le concentrateur de lumière principal (mLH) : Transmettre (SM7) le résultat généré à une unité externe, en particulier à une unité principale (MU), fixée de manière non permanente à un panneau de coffrage principal (P), portant l'unité principale (MU).

**6.** La méthode selon l'une des revendications précédentes, dans laquelle le protocole est basé sur un protocole de réponse au défi, dans lequel les impulsions lumineuses générées servent d'impulsions lumineuses au défi et sont envoyées par l'ensemble de sources lumineuses (Iss) du concentrateur de lumière (LH) aux concentrateurs de lumière esclaves dans d'autres panneaux de coffrage (P), qui en accusent réception en envoyant des impulsions lumineuses de réponse en retour.

**7.** La méthode selon l'une des revendications précédentes, dans laquelle l'émission (SM3) se fait dans quatre directions, en particulier une à la fois, et dans laquelle la séquence d'impulsions lumineuses est spécifique pour quatre directions et comprend un identificateur de direction.

**8.** La méthode selon l'une des revendications précédentes, dans laquelle la méthode à exécuter sur le concentrateur de lumière principal (mLH) comprend :

- Lancement d'une procédure de balise pour effectuer une procédure de poignée de main afin d'initier la communication avec les centres lumineux adjacents et de préparer le centre lumineux maître et le(s) centre(s) lumineux esclave(s) respectif(s) à la communication ;
- Lancement d'une procédure de découverte pour identifier tous les centres de lumière esclaves directement adjacents et déterminer leur position dans chacune des quatre directions en tant que premier résultat intermédiaire ;
- Lancer une fonction de cheminement pour identifier tous les concentrateurs de lumière esclaves, notamment en propageant la fonction de cheminement dans le réseau de concentrateurs de lumière en tant que deuxième résultat intermédiaire ;
- L'agrégation de tous les résultats intermédiaires de la procédure de recherche dans les quatre directions et la production d'un résultat, qui est stocké sous forme de structure de données de résultat sous forme numérique localement dans une mémoire.

**9.** La méthode selon la revendication de méthode directement précédente, dans laquelle la procédure de balise comprend les étapes suivantes :

- Envoi d'un signal de balise dans chacune des quatre directions à chaque centre lumineux adjacent avec un identifiant unique ;
- Réception d'une réponse au signal de balise envoyé ;
- Stocker l'identifiant unique du centre lumineux dont le signal d'acquittement a été reçu.

**10.** La méthode selon l'une des revendications précédentes, dans laquelle la méthode comprend :

- Ajuster la fréquence et/ou la puissance de la séquence d'impulsions lumineuses émises lors de l'étape d'émission (SM3), en particulier d'un signal de balise, afin d'optimiser à la fois le rapport signal/bruit et la consommation d'énergie.

**11.** La méthode selon les revendications 8, 9 ou 10, dans laquelle l'exécution de la procédure de découverte par le concentrateur principal de lumière (mLH) comprend l'exécution de la fonction de chemin, comprenant les étapes suivantes à exécuter sur le concentrateur principal de lumière (mLH) :

- l'envoi d'un identifiant unique aux noeuds lumineux esclaves adjacents dans chacune des quatre directions ;
- en réponse : réception des identificateurs uniques des concentrateurs de lumière esclaves adjacents en tant que message de réponse ;
- stocker le message de réponse avec une indication de la direction.

**12.** Méthode pour faire fonctionner le concentrateur de lumière esclave d'un panneau de coffrage selon la revendication 3 avec plusieurs panneaux de coffrage (P), dans laquelle le concentrateur de lumière esclave est configuré pour l'échange de signaux entre un ensemble de concentrateurs de lumière dans des panneaux de coffrage directement adjacents, comprenant les étapes suivantes, qui sont exécutées sur le concentrateur de lumière esclave :

- Réception (SS1) d'un signal de balise provenant d'un centre lumineux adjacent ;
- En réponse à la réception du signal de balise : Transférer (SS2) le concentrateur de lumière esclave d'un état de dormance à un état d'éveil ;
- Accuser réception (SS3) du signal de la balise ;
- Transférer (SS4) le concentrateur de lumière esclave de l'état d'éveil à l'état de dormance en appliquant une fonction de transfert ;
- Réception (SS5) d'un signal de découverte provenant d'un concentrateur de lumière adjacent ;
- Propager (SS6) le signal de découverte reçu à un centre lumineux adjacent dans la même direction jusqu'à ce qu'un dernier centre lumineux dans ladite direction soit atteint et incrémenter un compteur localement pour chaque identifiant unique agrégé.

**13.** La méthode selon la revendication directement précédente, dans laquelle la fonction de transfert prend en compte les ressources énergétiques réelles du centre d'éclairage.

**14.** Système d'échange de signaux lumineux entre plusieurs panneaux de coffrage (P) utilisés dans la construction de bâtiments pour réaliser une construction en panneaux, avec :

- Plusieurs panneaux de coffrage (P) selon la revendication 1, destinés à être érigés pour construire une structure en forme de mur ;
- Au moins une unité principale (MU) pour la pluralité de panneaux de coffrage, qui est configurée pour être fixée temporairement à un panneau de coffrage principal, dans lequel l'un de la pluralité de panneaux de coffrage (P) est configuré comme panneau de coffrage principal et son concentrateur de lumière est configuré comme concentrateur de lumière principal (mLH), qui sert à l'échange de signaux et comme interface avec l'unité principale (MU) et qui est configuré pour être exploité avec une méthode selon l'une quelconque des méthodes des revendications 4 à 11.

**15.** Le système selon la revendication directement précédente, dans lequel l'unité principale (MU) est une et/ou est au moins temporairement couplée à un système électronique secondaire (2C) via un protocole sans fil pour l'échange de données.

**16.** Le système selon l'une des revendications précédentes, dans lequel l'interface entre le concentrateur de lumière principal (mLH) et l'unité principale (MU) est bidirectionnelle et configurée pour envoyer et/ou recevoir des données.

**17.** Le système selon l'une des revendications précédentes, dans lequel le concentrateur de lumière maître (mLH) communique avec l'unité principale (MU) et/ou avec les concentrateurs de lumière esclaves par le biais d'impulsions lumineuses.

**18.** Le système selon l'une des revendications précédentes, dans lequel le concentrateur de lumière maître (mLH) est alimenté par l'unité principale (MU) ou par un système d'alimentation autonome et/ou est équipé d'une batterie et/ou dans lequel le concentrateur de lumière esclave est alimenté par un système d'alimentation autonome et/ou est équipé d'une batterie.

**19.** Le système selon l'une des revendications précédentes, dans lequel au moins un des panneaux de coffrage (P) a une structure d'angle avec un angle particulier et dans lequel le système comprend en outre des réflecteurs et/ou des filtres de lumière, fixés dans les canaux de lumière du panneau de coffrage (P) afin de fournir un échange de lumière également dans les structures d'angle.

**20.** Le système selon l'une des revendications précédentes, dans lequel la force du signal des signaux lumineux transmis, échangés entre les concentrateurs de lumière, est déterminée et traitée et/ou dans lequel des filtres sont placés dans le canal lumineux, pour activer des mesures correctives au cas où au moins un des panneaux de coffrage (P) n'est pas équipé d'un concentrateur de lumière (LH) ou un concentrateur de lumière esclave n'a pas suffisamment d'énergie.

FIG. 1

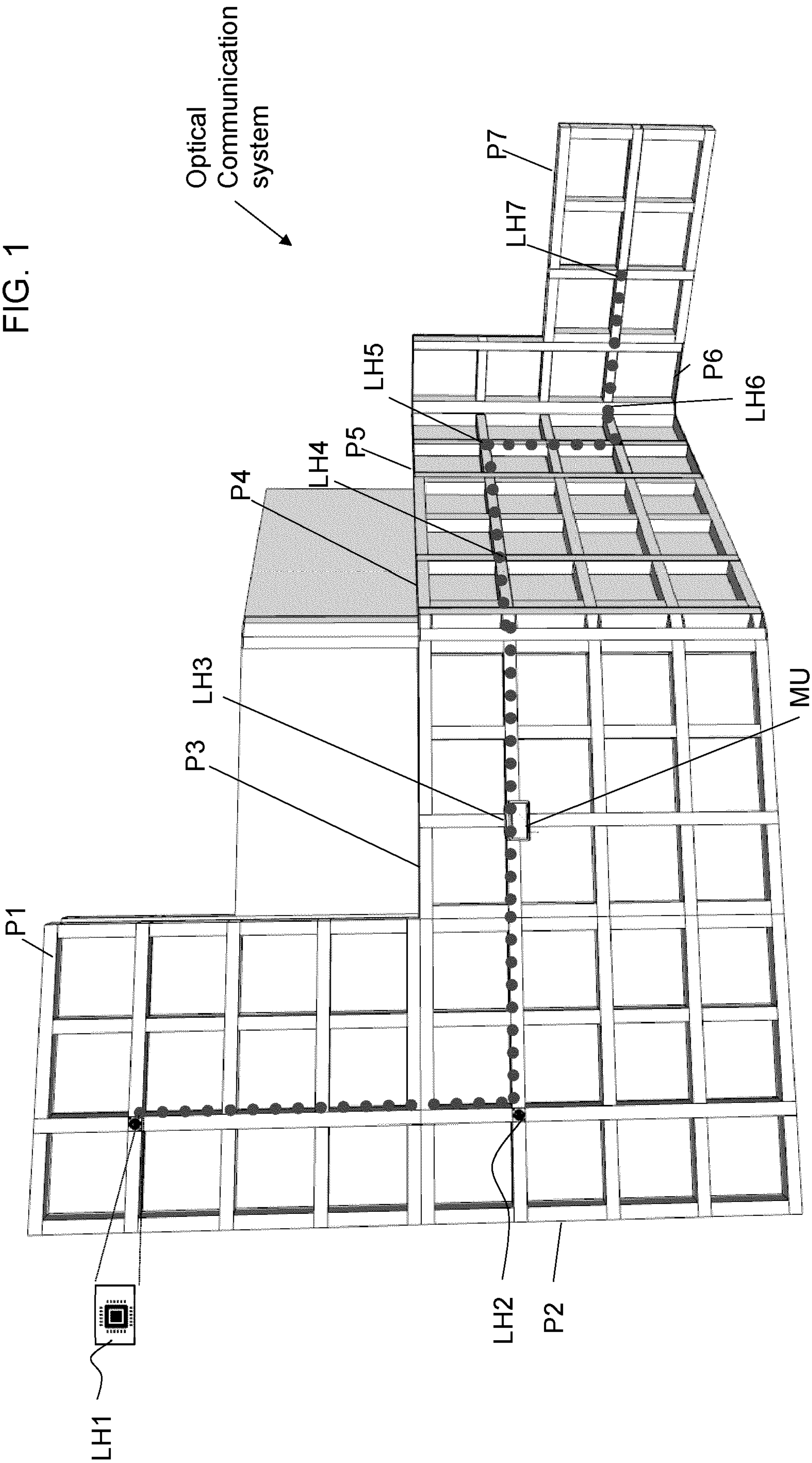
Optical Communication system
P1
P2
P3
P4
P5
P6
P7
LH1
LH2
LH3
LH4
LH5
LH6
LH7
MU

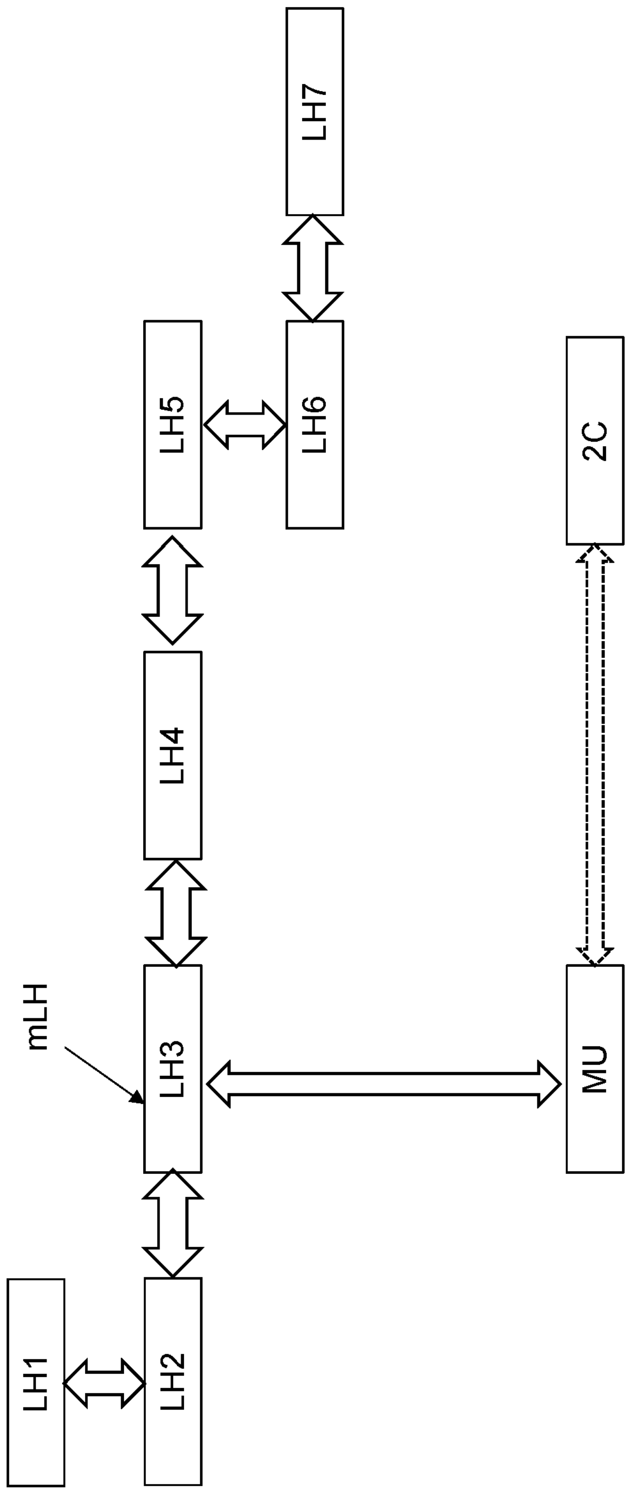


Fig. 2

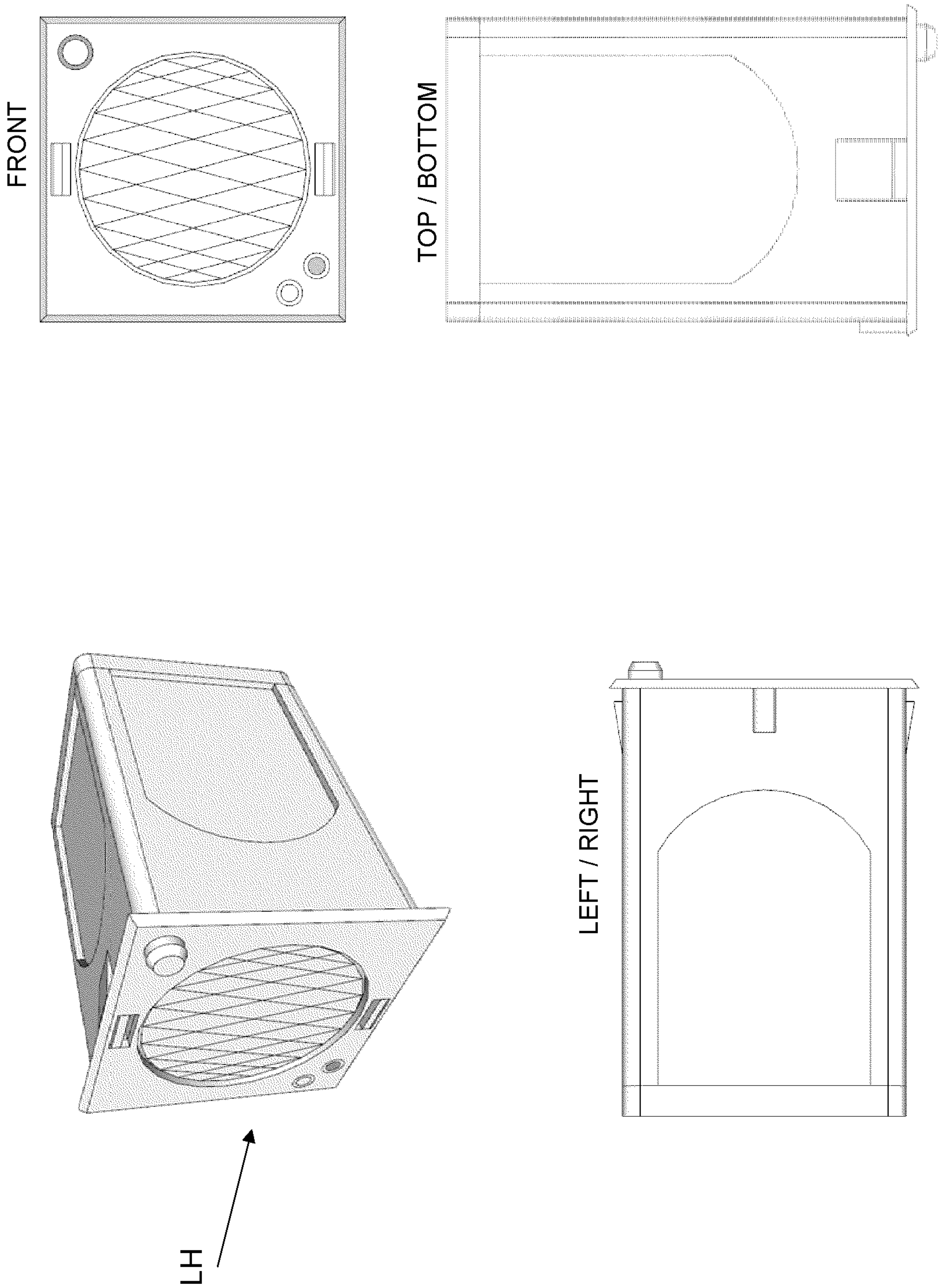


Fig. 3

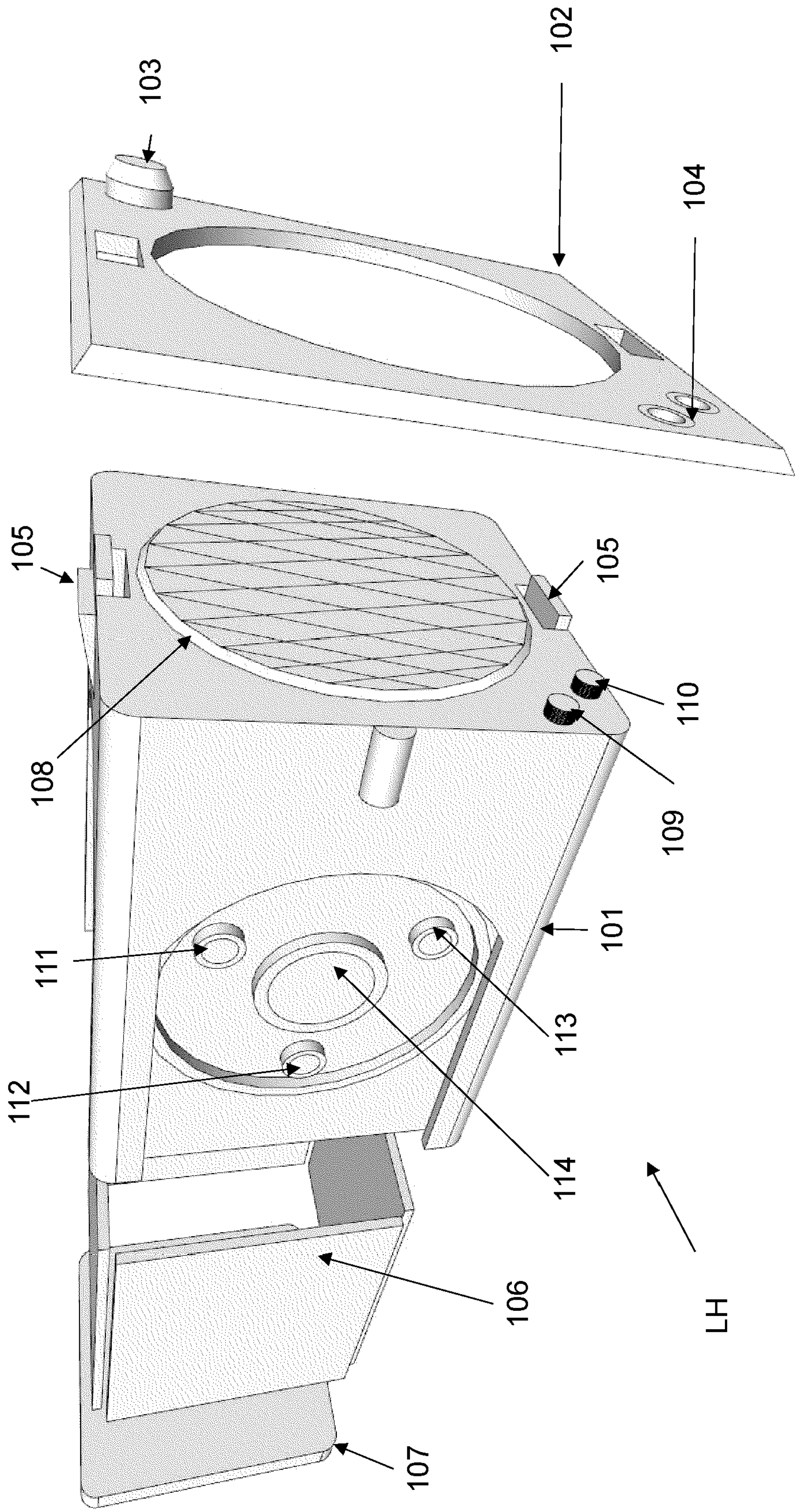


Fig. 4

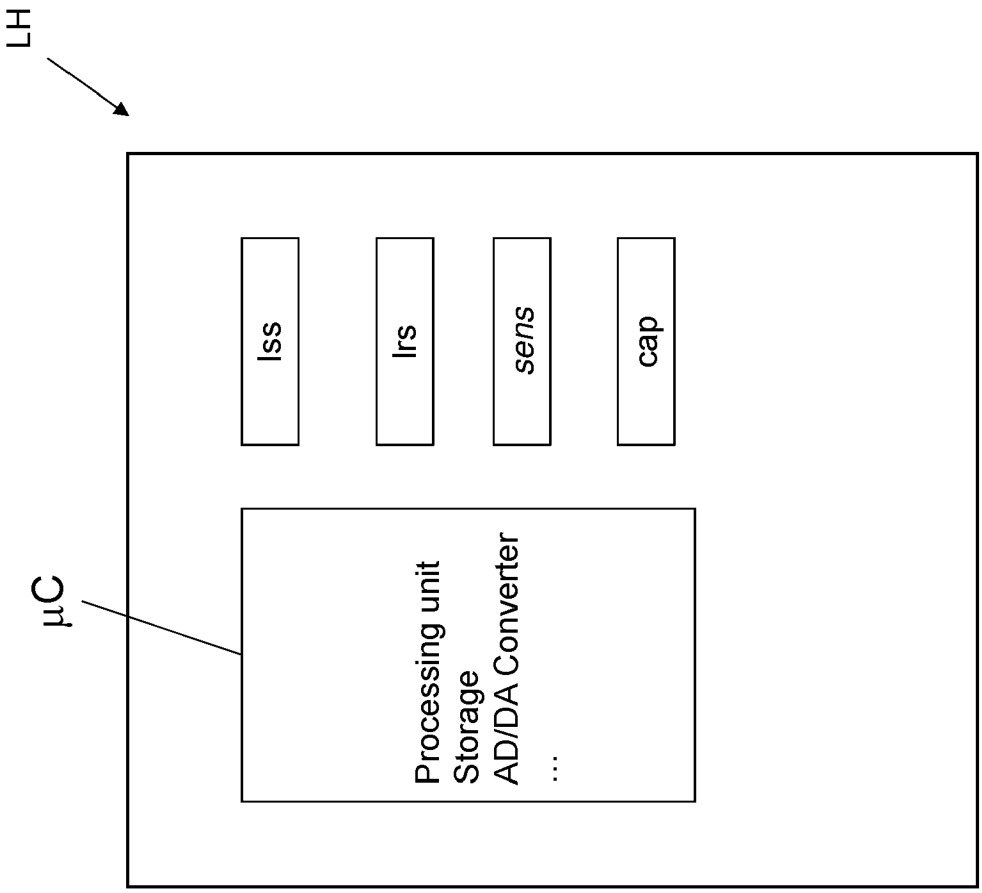
LH
μC
Processing unit
Storage
AD/DA Converter
...
lss
lrs
sens
cap

Fig. 5

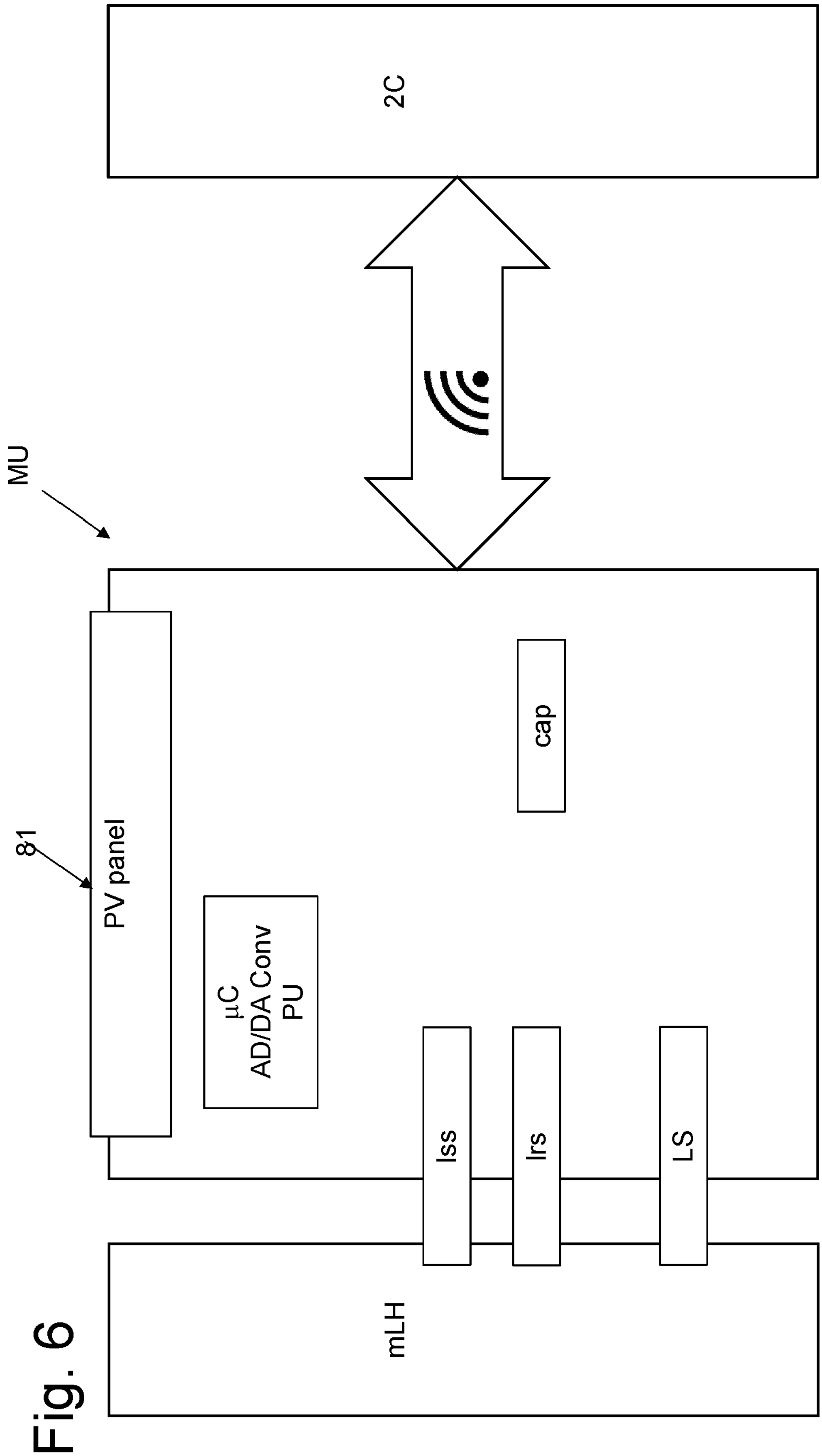


Fig. 6

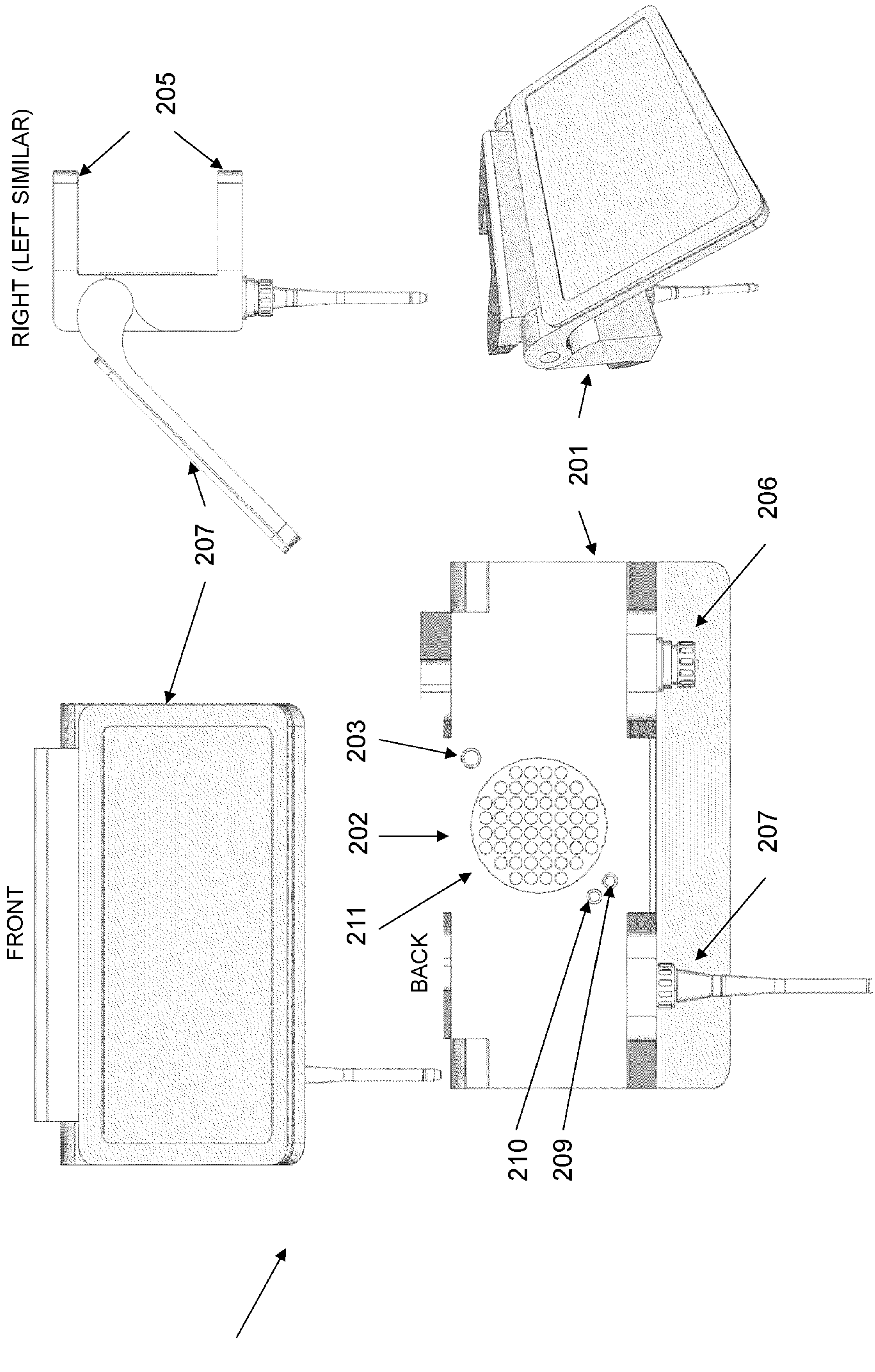

RIGHT (LEFT SIMILAR)
205
207
201
206
FRONT
BACK
203
202
211
207
210
209
MU


Fig. 7

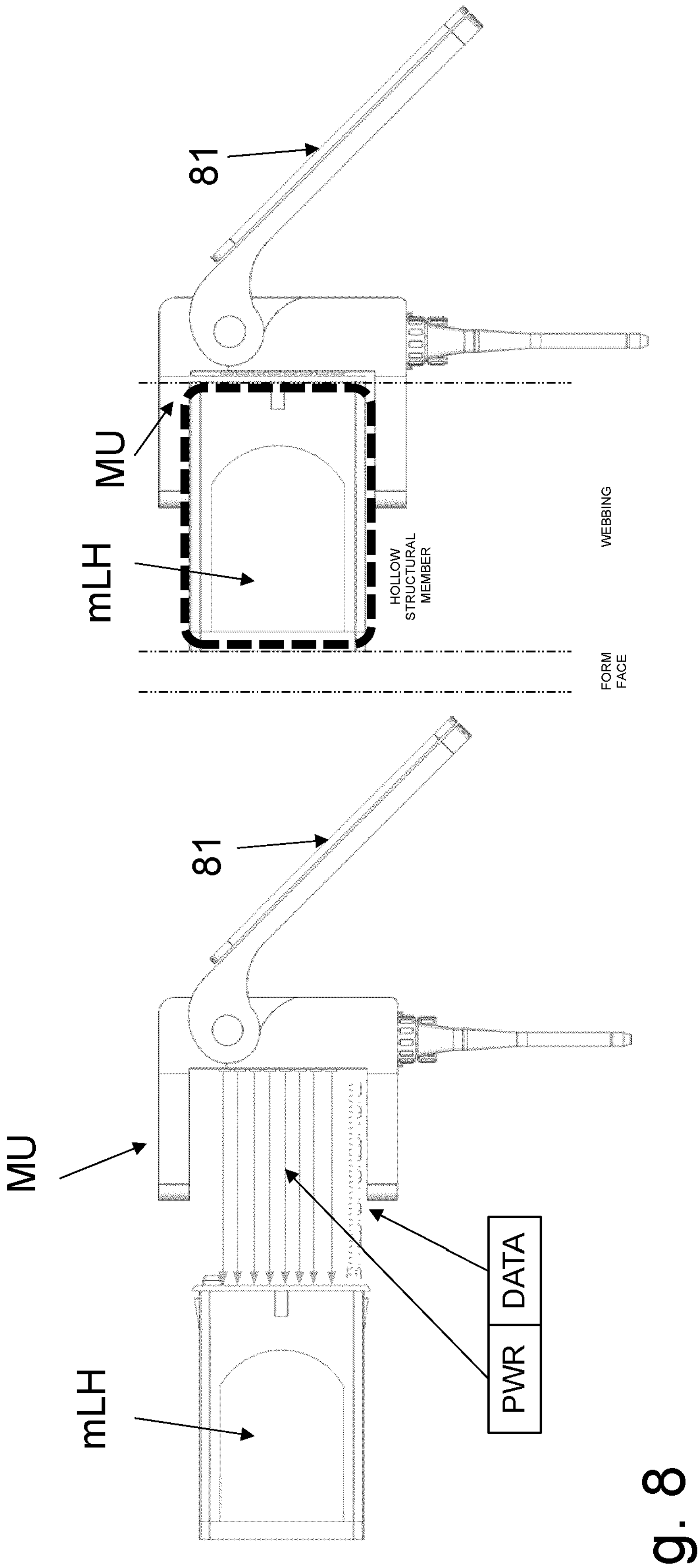
81
MU
mLH
HOLLOW
STRUCTURAL
MEMBER
WEBBING
FORM
FACE
81
MU
mLH
PWR
DATA

Fig. 8

Fig. 9

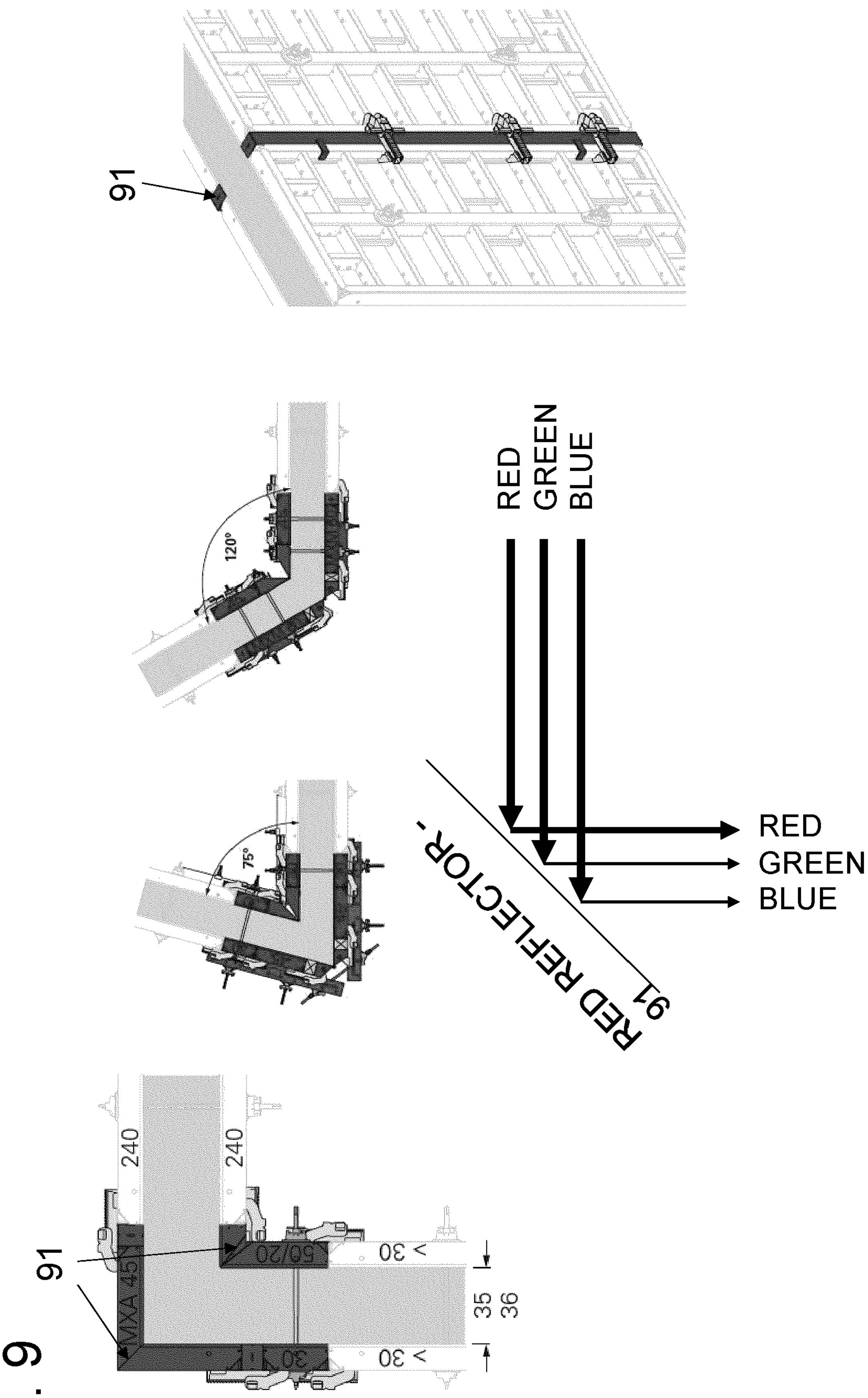
91
120°
75°
RED
GREEN
BLUE
RED REFLECTOR-
91
RED
GREEN
BLUE
240
240
MXA 45
60/20
30
> 30
> 30
35
36
91

Function: Discovery

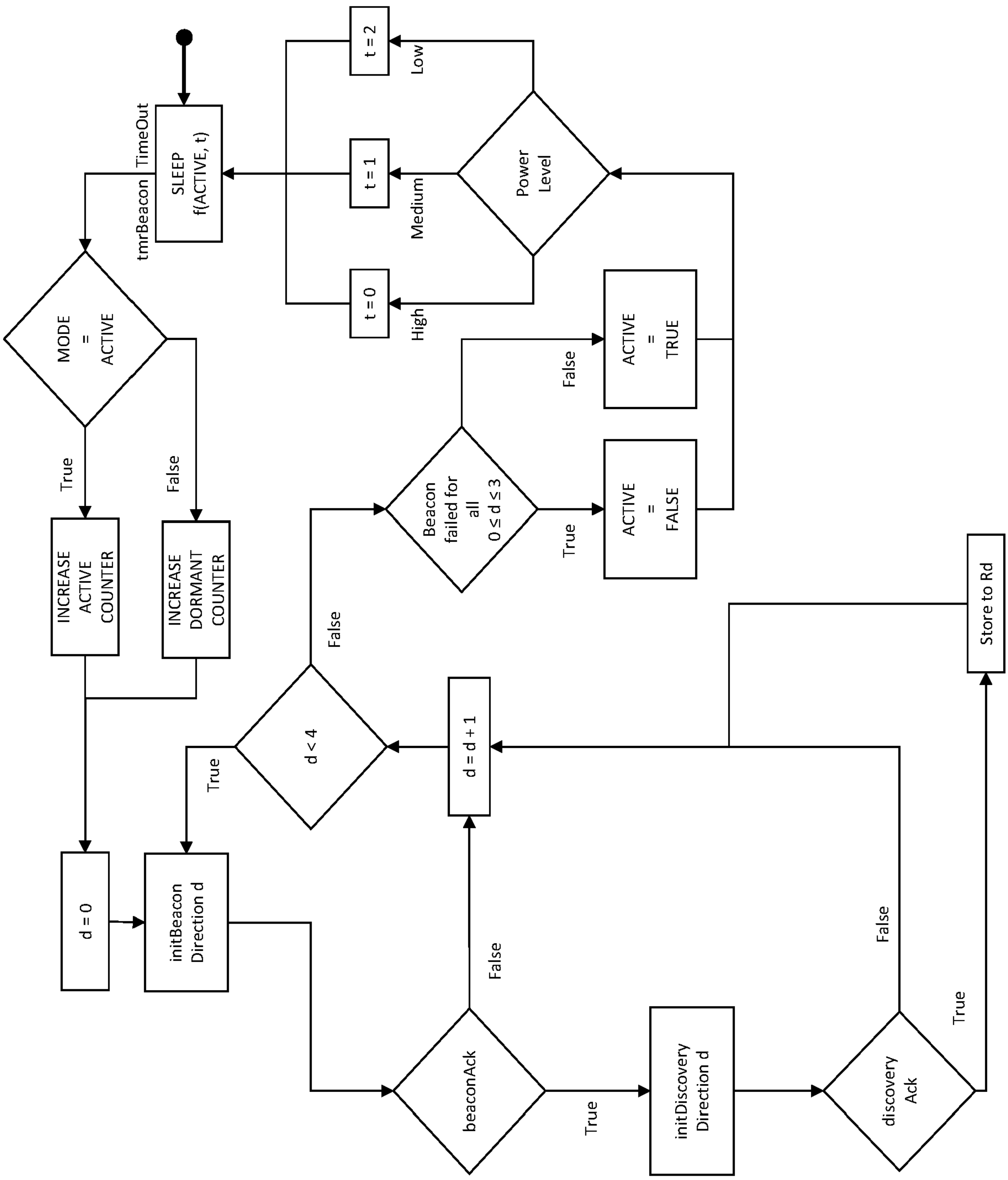


Fig. 10

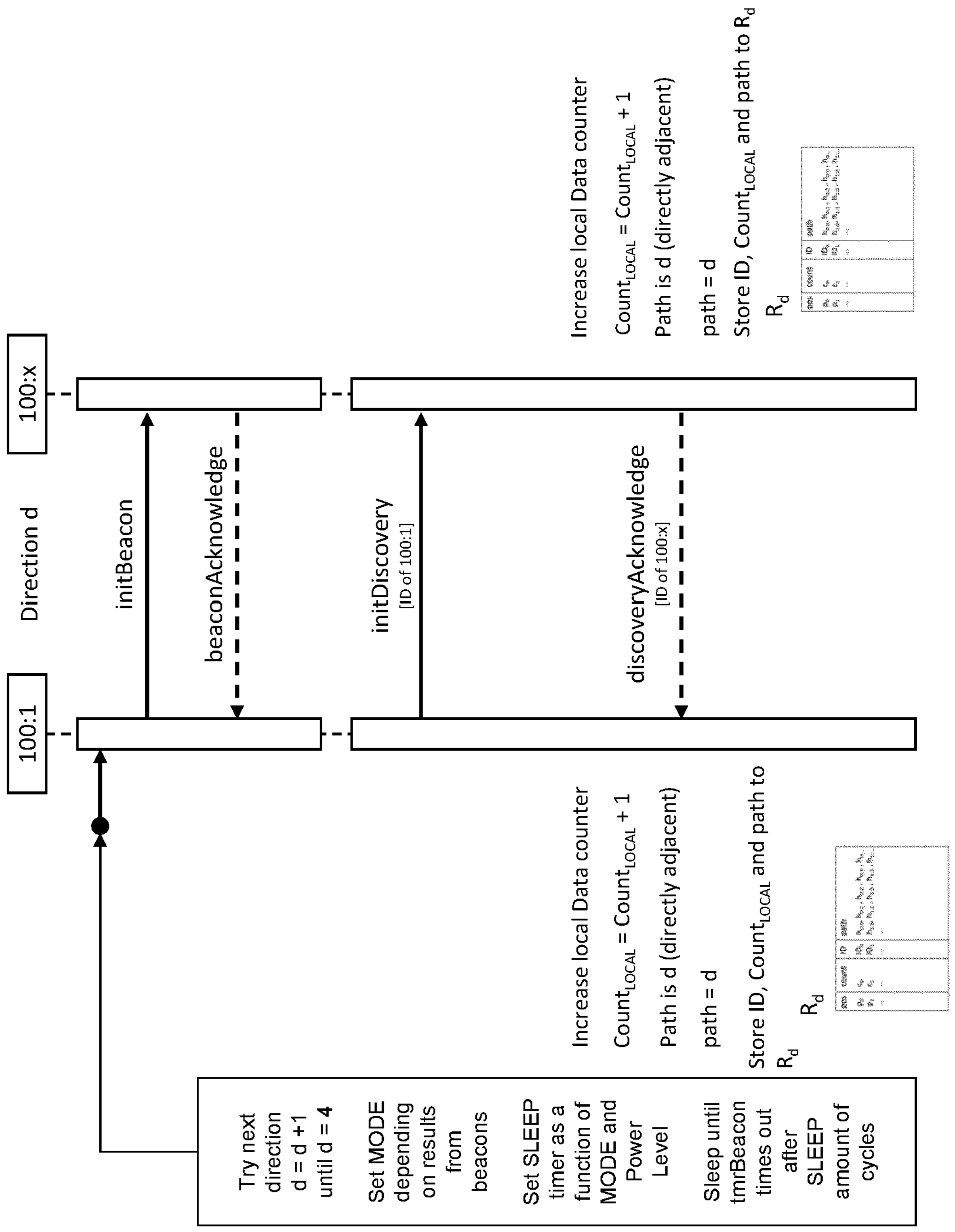


Function: Discovery

Fig. 11

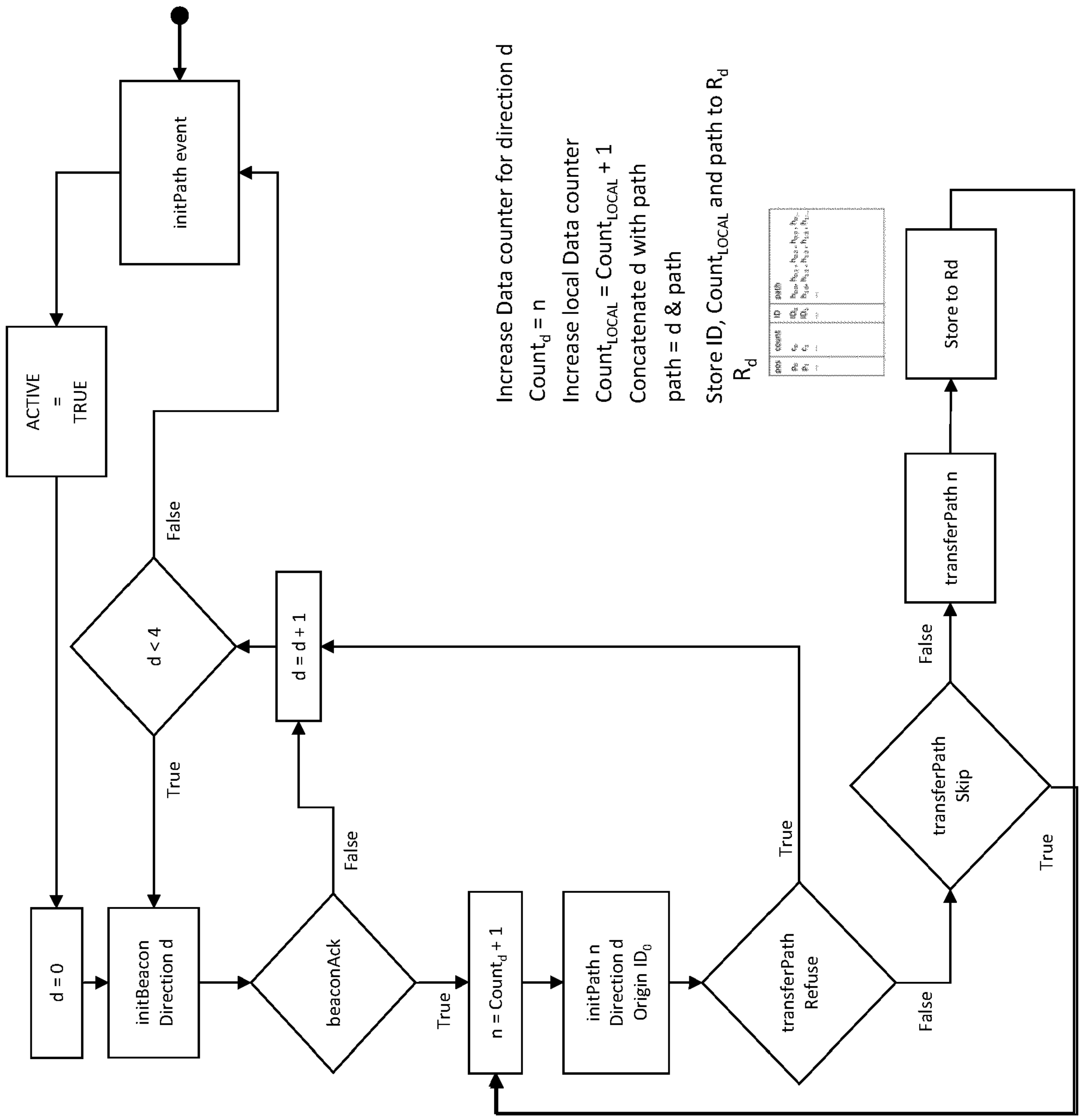


Function: Path

Fig. 12

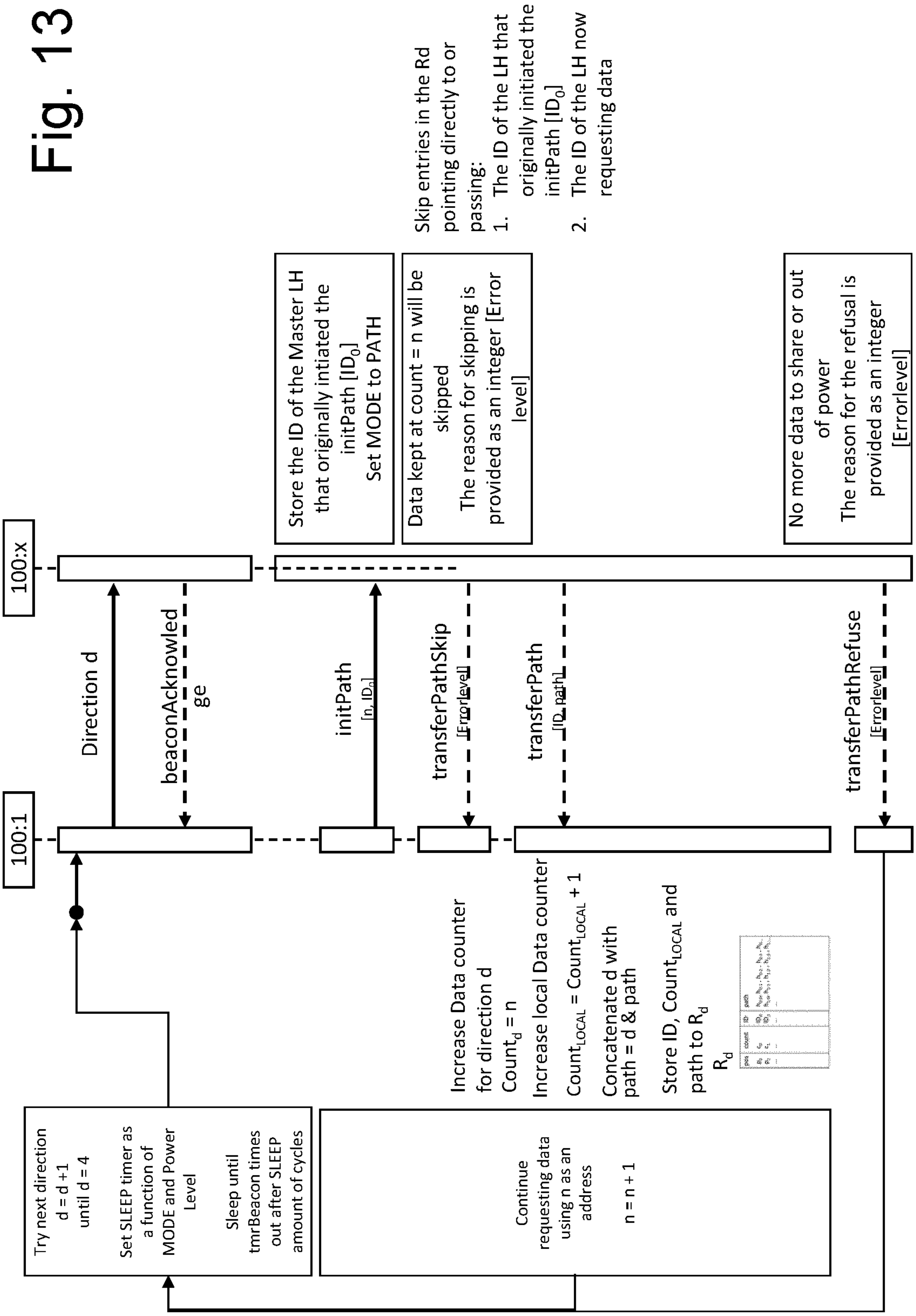
100:1
100:x
Direction d
beaconAcknowledge
initPath
[n, $ID_0$]
transferPathSkip
[Errorlevel]
transferPath
[ID, path]
transferPathRefuse
[Errorlevel]
Store the ID of the Master LH that originally intiated the initPath [$ID_0$]
Set MODE to PATH
Data kept at count = n will be skipped
The reason for skipping is provided as an integer [Error level]
Skip entries in the Rd pointing directly to or passing:
1. The ID of the LH that originally initiated the initPath [$ID_0$]
2. The ID of the LH now requesting data
No more data to share or out of power
The reason for the refusal is provided as an integer [Errorlevel]
Try next direction
d = d +1
until d = 4
Set SLEEP timer as a function of MODE and Power Level
Sleep until tmrBeacon times out after SLEEP amount of cycles
Continue requesting data using n as an address
n = n + 1
Increase Data counter for direction d
$Count_d = n$
Increase local Data counter
$Count_{LOCAL} = Count_{LOCAL} + 1$
Concatenate d with path = d & path
Store ID, $Count_{LOCAL}$ and path to $R_d$
$R_d$

Fig. 13

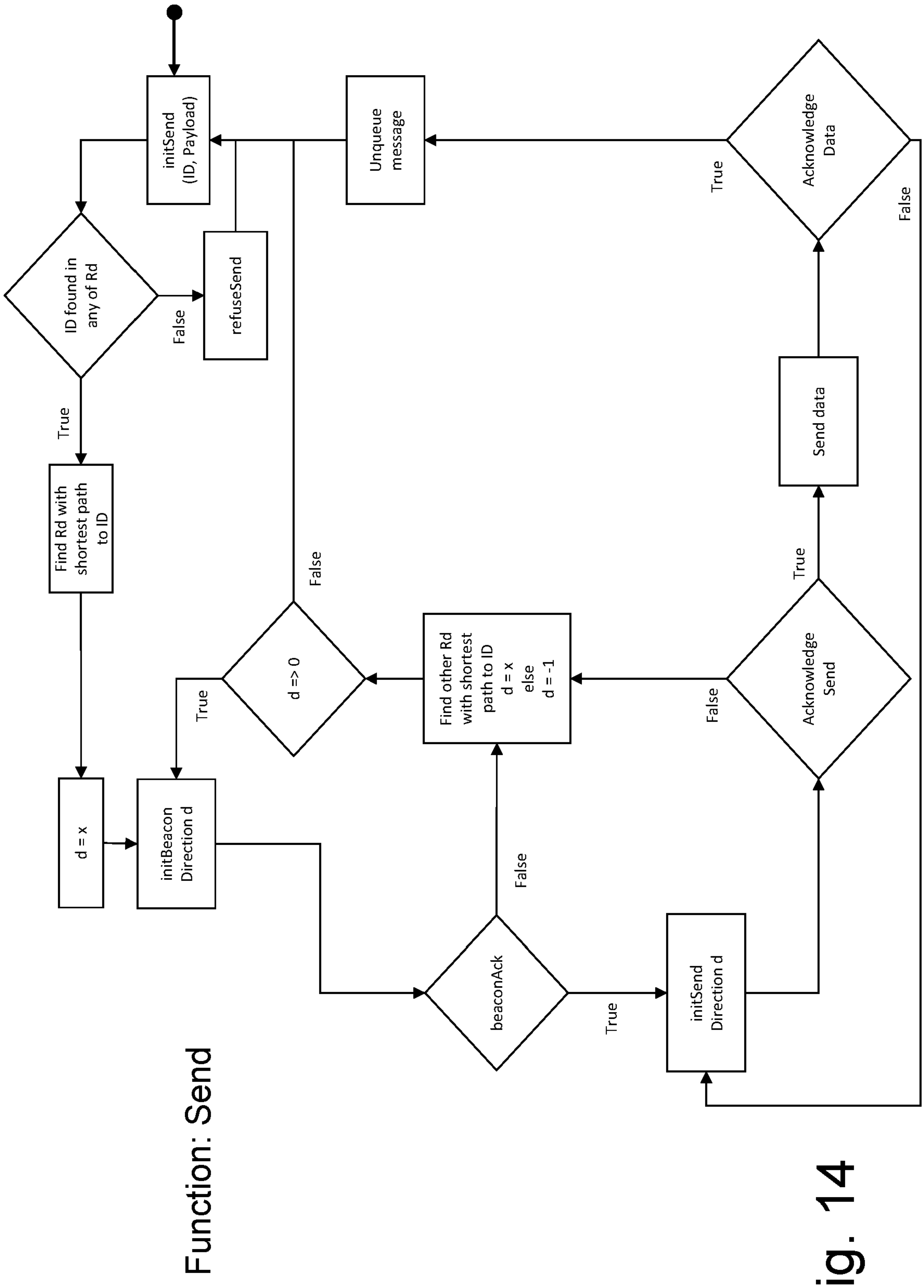
Function: Send
initSend
(ID, Payload)
ID found in
any of Rd
True
False
refuseSend
Find Rd with
shortest path
to ID
d = x
initBeacon
Direction d
beaconAck
True
False
initSend
Direction d
Find other Rd
with shortest
path to ID
d = x
else
d = -1
d => 0
True
False
Unqueue
message
Acknowledge
Send
True
False
Send data
Acknowledge
Data
True
False

Fig. 14

Function: Send

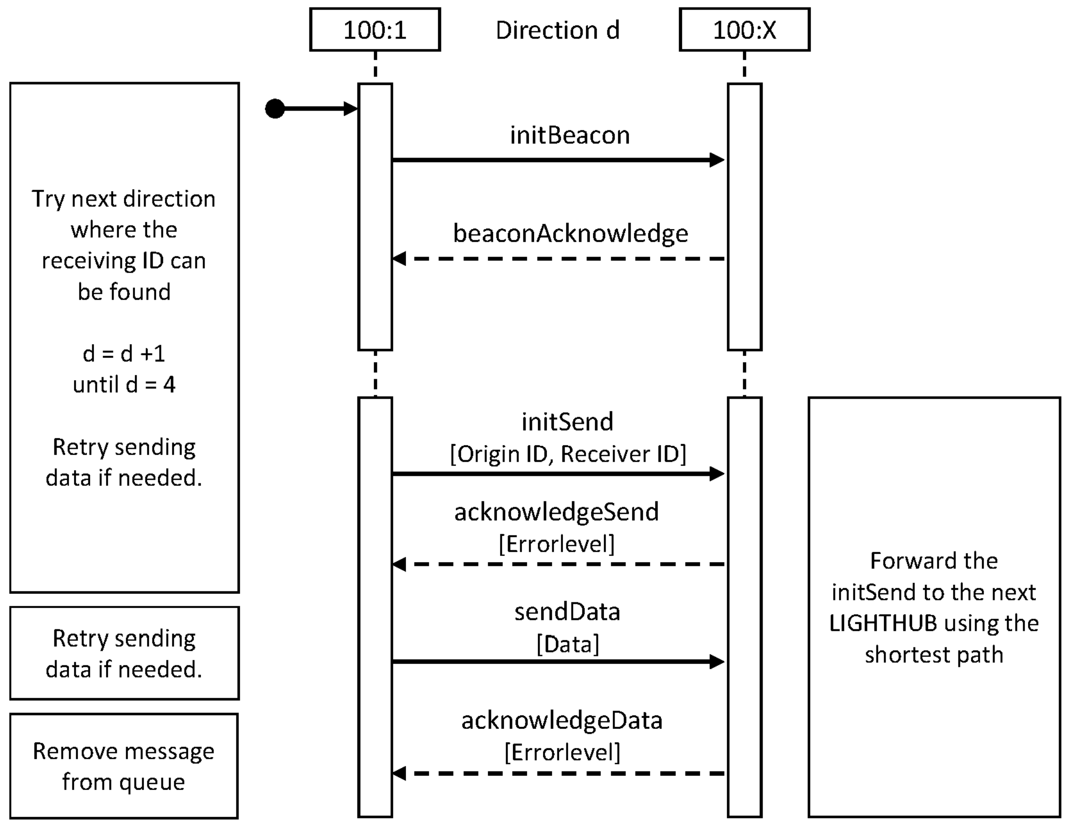


Fig. 15

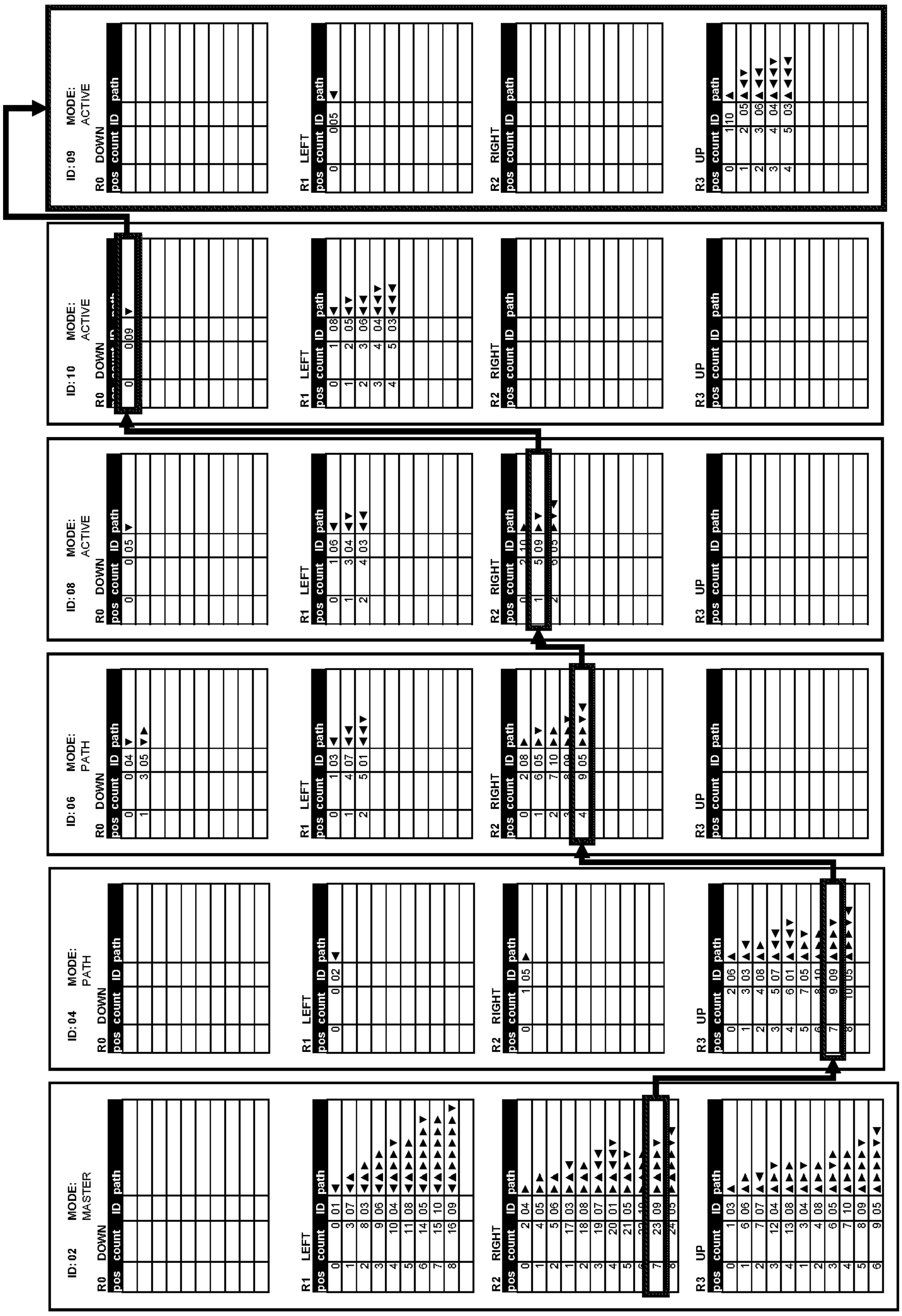


Example: Send

Fig. 16

Fig. 17

START -> SM1 -> SM2 -> SM3 -> SM4-> SM5 -> SM6 :::> SM7 -> END

Fig. 18

START -> SS1 -> SS2 -> SS3 -> SS4-> SS5 -> SM6 -> END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20160116892 A